# EUROPEAN PATENT APPLICATION

(11) **EP 1 705 436 A2**
(43) Date of publication of application: **27.09.2006**
(21) Application number: 06004151.4
(22) Date of filing: 01.03.2006
(51) Int. Cl.: F25B 41/06

(54) **Expansion valve and method for manufacturing the same**

(30) Priority: 04.03.2005 JP 2005060795; 22.07.2005 JP 2005212618; 09.12.2005 JP 2005356373; 20.01.2006 JP 2006012969
(71) Applicant: TGK COMPANY, LTD., Tokyo 193-0942 (JP)
(72) Inventor: Sendo, Isao, Hachioji-shi Tokyo 193-0942 (JP); Matsumoto, Michio, Hachioji-shi Tokyo 193-0942 (JP); Watanabe, Takeshi, Hachioji-shi Tokyo 193-0942 (JP); Kumakura, Takanao, Hachioji-shi Tokyo 193-0942 (JP)
(74) Representative: Grünecker, Kinkeldey, Stockmair & Schwanhäusser Anwaltssozietät

(57) **Abstract**

In an expansion valve, a body 2 is formed by die casting an aluminum alloy, and hence even when the body 2 has a complicated shape, it is possible to easily manufacture the body 2. Further, even a valve seat can be formed integrally with the body 2, and hence the manufacturing efficiency of the body 2 can be enhanced. Other component parts may also be formed integrally with the body 2 by die casting, to enhance yield from material and to reduce manufacturing costs.

## Description

The invention relates to an expansion valve according to the preamble of claim 1 and to a method according to the preamble of claim 25.

In general, a refrigeration cycle for an automotive air conditioner comprises a compressor, a condenser that condenses compressed refrigerant, a receiver for storing refrigerant and for separating condensed refrigerant into a gas and a liquid, an expansion valve for throttling and expanding liquid refrigerant, and an evaporator for evaporating expanded refrigerant.

A temperature expansion valve, as known for example from JP 2000-304382A, is used which senses temperature and pressure in the outlet of the evaporator, and controls the flow rate to the evaporator. This temperature expansion valve has a body with a first passage between the receiver and the evaporator, and a second return passage between the evaporator and the compressor. A valve section adjusts the flow rate in the first passage. An end of the body toward the second passage carries a power element sensing temperature and pressure in the second passage, and controlling the valve lift of the valve section via a drive shaft. The body generally is manufactured by first forming an aluminum alloy light in weight and excellent in machining property into a solid semi-finished product by extrusion molding. Then the first and second passages, the connection portion of the power element, and so forth, are machined by cutting. The cutting process needs a long machining time period and is low in yield, resulting in increased manufacturing costs of the expansion valve.

Another technique for manufacturing the body by hollow extrusion has been proposed in JP-10-267470A. The second passage is formed simultaneously with the body by extrusion molding, provided that the second passage is simple and straight. The cutting process for the second passage is eliminated. This also saves aluminum material, and enhances the manufacturing efficiency to some extent. However, an extrusion including the hollow extrusion can be applied only to straight-shaped portions having a fixed cross section in the predetermined extruding direction, but the extrusion of the first passage with which a valve seat as a component part of a valve section is integrally formed in an intermediate portion is impossible. Further, as there are needed diametrically expanded sealing surfaces for sealing members at ends of the first and second passages for the connection of pipes leading to the compressor, the receiver, and the evaporator, such sealing surfaces also cannot be formed by extrusion molding. Therefore, there is no other way but to machine the sealing surfaces, which makes it impossible to sufficiently reduce the amount of used materials and enhance manufacturing efficiency. When the second passage is extruded and then the passage ends are to be cut on a lathe, for example, it is complicated to position the extruded axis of the passage aligned with the axis of the rotating turning shaft during the cutting process. Therefore, for example, when a sealing portion is cut by a tool, such as a drill, the tool axis easily can be misaligned eccentrically with respect to the passage axis. Then eccentric loads act on the tool and on the body during machining, which cause machining problems.

Although it is contemplated also to manufacture the body by injection molding of a resin material, resin materials unavoidable are inferior to metal materials in rigidity and strength, and produce larger flow noises of refrigerant. Moreover, resin material once cured is difficult to plastically deform, and even when the valve section is about to be coined in accordance with the shape of the valve element, the resin material does not easily conform to dies, which is liable to cause fracture during machining. This makes it necessary to perform insert molding of a valve section separately formed of a metal, during injection molding, which makes the manufacturing process cumbersome.

It should be noted that the above-described problems are not only true for temperature expansion valves but also for other electromagnetic expansion valves and the like.

It is an object of the present invention to enhance the manufacturing efficiency of a body of an expansion valve and yield of material, thereby reducing the manufacturing costs of the expansion valve.

This object is achieved by the features of claim 1 and by the method of claim 25.

As in the expansion valve a body is formed by die casting a metal, it is possible to easily manufacture the body even when it has a complicated shape that e.g. includes a large number of lightening portions. Further, since the valve seat which is difficult to form by extrusion can be formed substantially integrally with the body, it is possible to enhance the manufacturing efficiency of the body. As well, portions, such as the valve seat, conventionally formed by cutting, can be formed integrally with the body by die casting. Therefore, it is possible to enhance yield from material and to reduce the manufacturing costs of the expansion valve.

By employing the semi-solid die casting process for molding the body, it is possible to suppress generation of cavities by entrained air, shrinkage cavities, and the like. It becomes possible to achieve high hermeticity, high strength, high toughness, and high resistance properties. Expediently, a metal slurry is processed which has a lower temperature than that of a molten metal, which makes it possible to reduce thermal load on a mold to increase the service life of the mold.

In the drawings is:
- Fig.1: a front view of a first embodiment of an expansion valve,
- Fig. 2: a left side view of the expansion valve,
- Fig. 3: a rear view of the expansion valve,
- Fig. 4: a cross-sectional view taken on line A-A of
- Fig. 5: a view explaining essentials of a method of manufacturing the expansion valve,
- Fig. 6: a view explaining a state when the expansion valve is mounted between a vehicle compartment and an engine room,
- Fig. 7: a section taken on line B-B of Fig. 6,
- Figs. 8A, 8B and 8C: views explaining a variation of the first embodiment of the expansion valve,
- Figs. 9A, 9B and 9C: views explaining a variation of the first embodiment of the expansion valve,
- Figs. 10A, 10B and 10C: views explaining a variation of the first embodiment of the expansion valve,
- Fig. 11: a front view of a second embodiment of an expansion valve,
- Fig. 12: a left side view of the expansion valve of Fig. 11,
- Fig. 13: a rear view of the expansion valve of Fig. 11,
- Fig. 14: a section taken on line C-C of Fig. 11,
- Fig. 15: a front view of a third embodiment of an expansion valve,
- Fig. 16: a left side view of the expansion valve of Fig. 15,
- Fig. 17: a right side view of the expansion valve of
- Fig. 18: a rear view of the expansion valve of Fig. 15,
- Fig. 19: a section taken on line D-D of Fig. 15,
- Figs. 20A, 20B, 20C and 20D: views explaining a variation of the third embodiment,
- Fig. 21: a perspective view of a fourth embodiment of an expansion valve,
- Fig. 22: a front view of the expansion valve of Fig.
- Fig. 23: a left side view of the expansion valve of Fig.
- Fig. 24: a section taken on line E-E of Fig. 22,
- Fig. 25: a section taken on line F-F of Fig. 23,
- Fig. 26: a view explaining essentials of a method of manufacturing the expansion valve of Fig. 21,
- Fig. 27: a rear view of a fifth embodiment of an expansion valve,
- Fig. 28: a section taken on line G-G of Fig. 27,
- Fig. 29: a section of a variation of the fifth embodiment,
- Fig. 30: a section of a sixth embodiment of an expansion valve,
- Fig. 31: a left side view of a seventh embodiment of an expansion valve,
- Fig. 32: a view explaining a state when the expansion valve is mounted between the vehicle compartment and the engine room,
- Fig. 33: a section taken on line H-H of Fig. 32,
- Fig. 34: a left side view of an eighth embodiment of an expansion valve,
- Fig. 35: a view explaining when the expansion valve is mounted between the vehicle compartment and the engine room,
- Fig. 36: a section taken on line I-I of Fig. 35,
- Figs. 37A and 37B: views explaining the construction of a body of a ninth embodiment of an expansion valve,
- Fig. 38: a section of a tenth embodiment of an expansion valve,
- Figs. 39A, 39B and 39C: views explaining the construction of a valve section and its vicinity of a body,
- Figs. 40A, 40B and 40C: views explaining a first variation of the tenth embodiment,
- Figs. 41A, 41B and 41C: views explaining a second variation of the tenth embodiment.

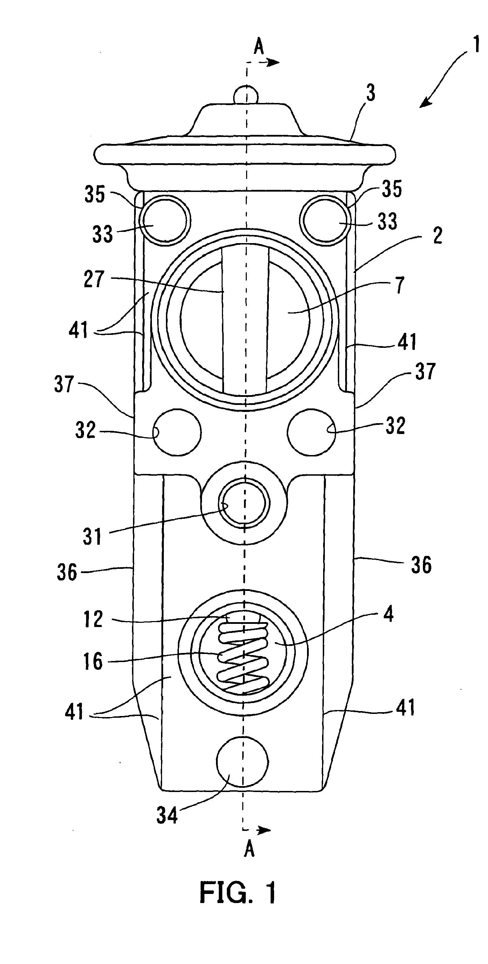

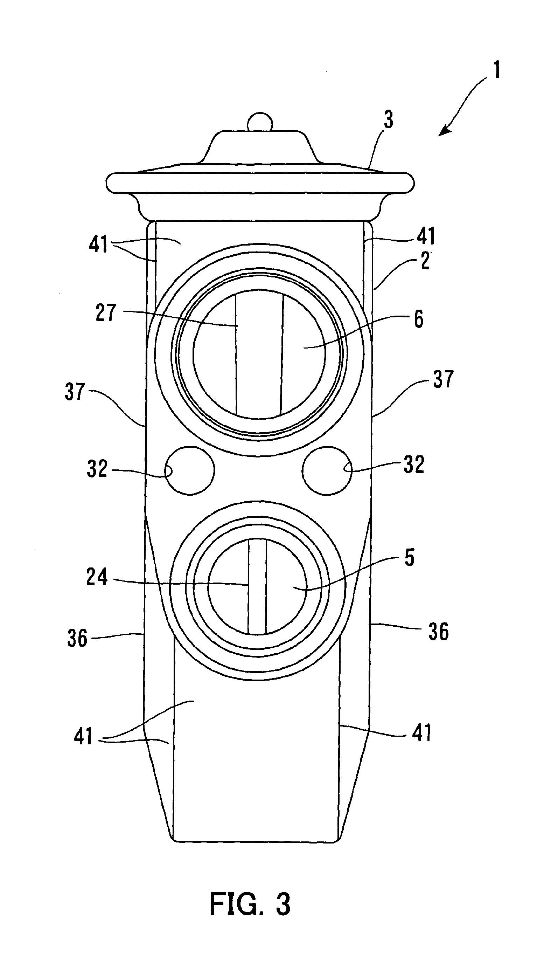

First of all, a first embodiment of the present invention will be described. In the first embodiment of Figs. 1 to 10C an expansion valve 1 is embodied as a temperature expansion valve for a refrigeration cycle for an automotive air conditioner.

The expansion valve 1 in Figs. 1 - 3 has a body 2 formed by die casting of an aluminum alloy. The body 2 is generally prism-shaped, and has lightening portions all over its side surfaces for reducing the weight. A valve section for throttling and expanding refrigerant is formed inside the body 2, and a power element 3 functioning as a temperature-sensing section is provided at a longitudinal end of the body 2.

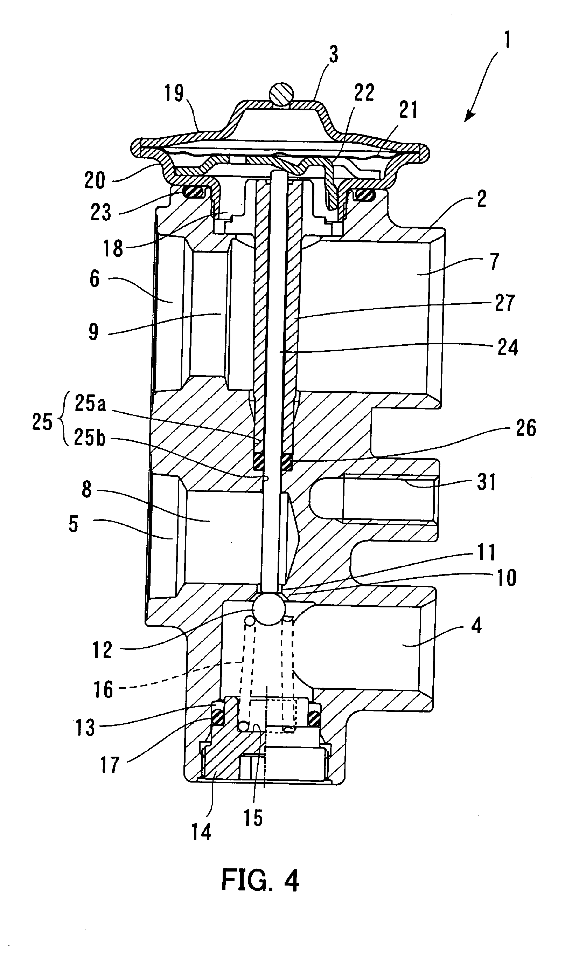

In Fig. 4, the body 2 has sides formed with a port 4 (first port) for receiving high-temperature, high-pressure liquid refrigerant from a receiver (a condenser side), a port 5 (second port) for supplying low-temperature, low-pressure refrigerant throttled and expanded by the expansion valve 1 to an evaporator, a port 6 (third port) for receiving refrigerant evaporated by the evaporator, and a port 7 (fourth port) for returning refrigerant to a compressor. A first passage 8 is formed by the port 4, the port 5, and a refrigerant passage therebetween. A second passage 9 is formed by the port 6, the port 7, and a refrigerant passage therebetween. The respective open ends of the ports 4, 5 are provided with sealing surfaces for placing sealing members between the open ends and pipes connected to the receiver and the evaporator. The respective open ends of the ports 6, 7 are also formed with sealing surfaces for placing sealing members between these open ends and pipes connected to the evaporator and the compressor. All sealing surfaces are tapered such that they are widened outward.

A valve seat 10 is formed integrally with the body 2 in a portion of the first passage 8. A valve hole 11 is defined by an inner periphery of the valve seat 10. A ball-shaped valve element 12 as a component part of the valve section is disposed on the upstream side of the valve seat 10. Further, a communication hole 13 (corresponding to an adjustment part), which is approximately orthogonal to the first passage 8 and communicates with the outside, is formed in a lower end of the body 2. An adjustment screw 14 (functioning as an adjustment mechanism) closes the communication hole 13. A spring-receiving member 15 in the form of a circular recess is formed in a foremost end face of the adjustment screw 14. The member 15 accommodates and supports one end of a helical compression spring 16 interposed between the spring-receiving member 15 and the valve element 12 for urging the valve element 12 in valve closing direction toward the valve seat 10. The screwing depth of the adjustment screw 14 adjusts the load of the helical compression spring 16. An O ring 17 seals between the adjustment screw 14 and the body 2.

A communication hole 18 in an upper end of the body 2 (a temperature-sensing part), extends approximately orthogonal to the second passage 9 and communicates with the outside. The power element 3 is screwed into the communication hole 18 and seals the communication hole 18. The power element 3 comprises an upper housing 19 and a lower housing 20, both made of stainless steel material, a diaphragm 21 being a thin metal plate having flexibility and disposed in a manner dividing a space enclosed by the housings 19, 20, and a disk 22 disposed below the diaphragm 21. A temperature-sensing gas fills a temperature-sensing chamber hermetically sealed by the upper housing 19 and the diaphragm 21. An O ring 23 seals between the power element 3 and the body 2. The pressure and temperature of refrigerant passing through the second passage 9 are transmitted to the lower surface of the diaphragm 21 via the communication hole 18 and a hole or slit formed in the disk 22. A shaft 24 below the disk 22 transmits the displacements of the diaphragm 21 to the valve element 12. The shaft 24 extends through a through hole 25 in the body 2. The through hole 25 has an upper large-diameter portion 25a, and a lower small-diameter portion 25b. The large-diameter portion 25a has an upper open end formed to have a shape of a tapered chamfer. An O-ring 26 in the large-diameter portion 25a seals between the shaft 24 and the through hole 25.

An upper portion of the shaft 24 is held by a holder 27 which crosses the second passage 9. A lower end of the holder 27 is fitted in the large-diameter portion 25a. The lower end face of the holder 27 secures the O ring 26. The shaft 24 extends through the small-diameter portion 25b into the valve hole 11. An upper end of the shaft 24 abuts at a lower abutment surface of the disk 22. The abutment surface of the disk 22 is inclined with respect to a plane orthogonal to the axis of the shaft 24. So, the shaft 24 will not only receive axial load but also lateral load when the diaphragm 21 is displaced axially. The lateral load on the shaft 24 assures that even when there occurs a pressure change of high-pressure refrigerant in the port 4, the shaft 24 is inhibited from too sensitively reacting to the change, by an axial motion whereby longitudinal vibrations of the shaft 24 will be suppressed by the then increased friction in the holder 27.

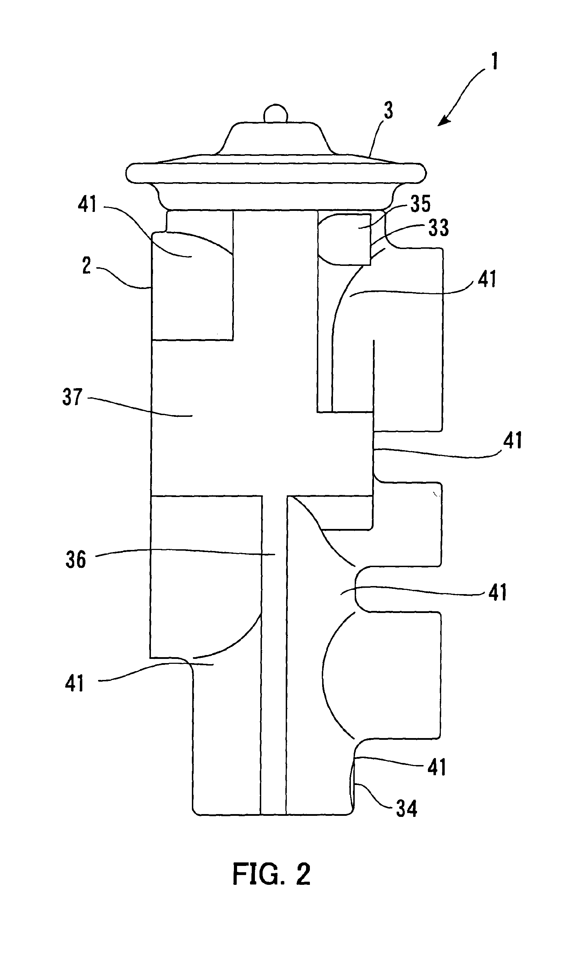

In Figs. 1 and 4, a screw hole 31 having a predetermined depth is formed in the center of a side surface of the body 2 between the ports 4, 7 (i.e. at an engine room side). The screw hole 31 serves to fasten a bolt for fixing a not shown plate on the body 2 for connecting pipes (to the compressor and the receiver) to the ports 7 and 4. Further, a pair of dummy holes 32 are formed between the port 7 and the screw hole 31. The dummy holes 32 are provided for inserting bolts for fixing plates at the body 2 for connecting pipes (to the evaporator) at the ports 6 and 8. Furthermore, abutment surfaces 33, 34 intended for a tool used for pushing out a molded body when removing the molded body from a mold after die casting of the body 2, are formed at upper and lower locations of the body 2. As shown in Fig. 2, the pair of the upper abutment surfaces 33 are formed on protrusions 35 protruding from the lightening portions such that the upper abutment surfaces 33 are arranged on approximately the same plane as the lower abutment surface 34.

In Figs. 1 to 3, in the left and right side surfaces (side surfaces approximately parallel to the first and second passages 8, 9) of the body 2, mounting surfaces 36 are formed intended for mounting the expansion valve 1 on a fire wall member at a boundary between a vehicle compartment and the engine room. Flat surfaces 37 also are formed which serve as holders when the expansion valve 1 is carried by an apparatus. Although in the embodiment, the mounting surface 36 and the flat surface 37 are connected on the same plane, this is not necessarily required, but steps may be formed at boundaries therebetween, or the surfaces 36 and 37 may be separated from each other.

It should be noted that the mounting surfaces 36 and the flat surfaces 37 are parts of the outer shape of a normal body, which are intentionally left by taking operability and the like into account when a plurality of lightening portions are formed in the body 2. In other words, to reduce the weight of the body 2 as much as possible while preserving the above convenient shapes, the lightening portions are formed in the respective side surfaces of the body 2. More specifically, the lightening portions 41 are formed in portions of the left and right side surfaces of the body 2, except for the portions formed with the mounting surfaces 36 and the flat surfaces 37, and portions of side surfaces (front and rear surfaces) of the body 2 orthogonal to these faces 36 and 37, except for the respective rims of the first passage 8, the second passage 9, and the threaded hole 31. Even lightening portions having the above-described relatively complicated shapes can be easily formed by die casting.

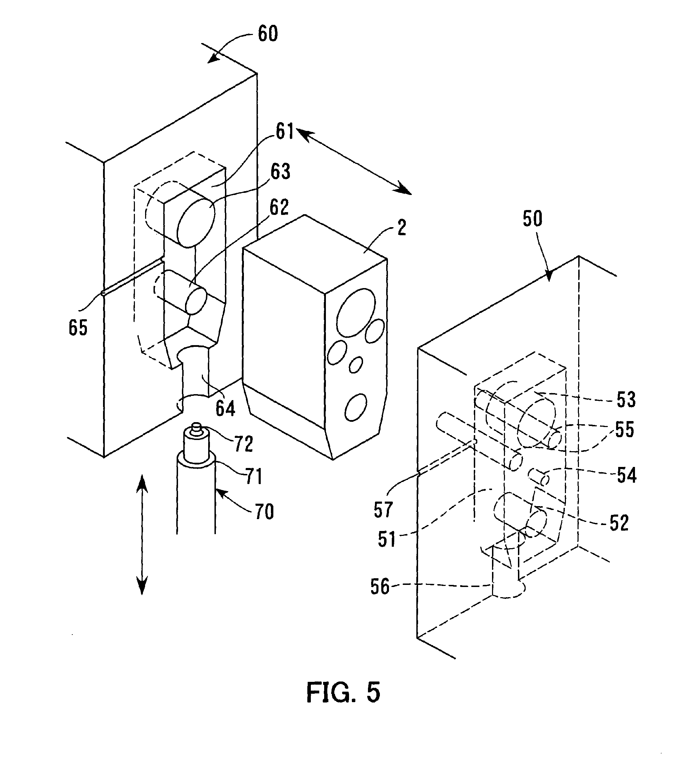

Fig. 5 is a view explaining essentials of the method of manufacturing the expansion valve. In Fig. 5, the shape of the expansion valve is simplified for clarity. The expansion valve 1 of Fig. 5 is manufactured by die casting an aluminum alloy in an apparatus including a first mold 50, a second mold 60, and a mandrel 70. Mold chambers for forming the main body, refrigerant passages, and the like of the body 2 are formed by the first mold 50, the second mold 60, and the mandrel 70. The first mold 50 has a chamber 51 for molding a front half of the body 2 where the ports 4 and 7 are located. Inside the chamber 51, port-forming portions 52 and 53 for forming the respective ports 4 and 7, a screw hole-forming portion 54 for forming a pilot hole of the screw hole 31, and dummy hole-forming portions 55 for forming the pair of dummy holes 32 protrude toward the opening of the chamber 51. Although not shown, root portions of the port-forming portions 52 and 53 have tapered shapes so as to form the sealing surfaces for the sealing members. Further, a mandrel insertion portion-forming groove 56 for forming an insertion hole for inserting the mandrel 70, and an injection passage-forming groove 57 for forming an injection passage for injecting a molten aluminum alloy communicate with the chamber 51. It should be noted that although not shown, the first mold 50 is formed with insertion holes at locations corresponding to the above-mentioned abutment surfaces 33 and 34 of the body 2, for guiding removal tools.

The second mold 60 has a chamber 61 for molding the rear half of the body 2 where the ports 5 and 6 are located. Inside the chamber 61, port-forming portions 62 and 63 for forming the respective ports 5 and 6 protrude toward the opening of the chamber 61. Although not shown, root portions of the port-forming portions 62 and 63 are tapered so as to form the sealing surfaces for the sealing members. Further, a mandrel inserting portion-forming groove 64 for forming the insertion hole for inserting the mandrel 70 together with the mandrel inserting portion-forming groove 56 when the second mold 60 are combined with the first mold 50, and an injection passage-forming groove 65 for forming the injection passage for injecting the molten aluminum alloy in cooperation with the injection passage-forming groove 57 when the second mold 60 are combined with the first mold 50, communicate with the chamber 61.

Furthermore, the mandrel 70 has a stepped hollow cylindrical shape, and is formed with an adjustment part-forming portion 71 for forming the above-mentioned communication hole 13 (adjustment part), and a valve section-forming portion 72 for forming the valve section (the valve seat 10 and the valve hole 11) in the second passage 8. Particularly, the valve section-forming portion 72 has a tapered inclined surface such that the valve hole 11 is hermetically sealed when the ball-shaped valve element 12 later will be seated on the valve seat 10, to thereby prevent occurrence of refrigerant leakage and is configured such that coining can be achieved.

When manufacturing the body 2, the molten aluminum alloy is injected in to the mold. Preferably, an Al-Si-Cu-based aluminum alloy (excellent in castability) is employed as the aluminum alloy. The aluminum alloy may be composed of 9.6 to 12.0 wt% of Si, 0 to 1.3 wt% of Fe, 1.5 to 3.5 wt% of Cu, 0 to 0.5 wt% of Mn, 0 to 0.3 wt% of Mg, 0 to 1.0 wt% of Zn, 0 to 0.5 wt% of Ni, 0 to 0.3 wt% of Sn, and Al and, unavoidable impurities, as the remainder. Particularly, the content of 9.6 to 12.0 wt% of Si assures an excellent fluidity of the molten aluminum alloy. Further, by limiting the content of Cu to 1.5 to 3.5 wt%, shrinkage defects can be suppressed.

After the aluminum alloy has hardened, the first and second molds 50, 60 are separated after the mandrel 70 is drawn out. A semi-finished product of the body 2 remains in contact with the first mold 50. Therefore, the tools advance from the insertion holes against the abutment surfaces 33 and 34, and separate the semi-finished product of the body 2 from the first mold 50. Then, there are machined respective threads in the communication hole 18 (temperature-sensing part) for later mounting the power element 3, in the screw hole 31, and in the communication hole 13 (adjustment part). Further, by machining a portion for the O ring 23 and the through hole 25, the body 2 is completed.

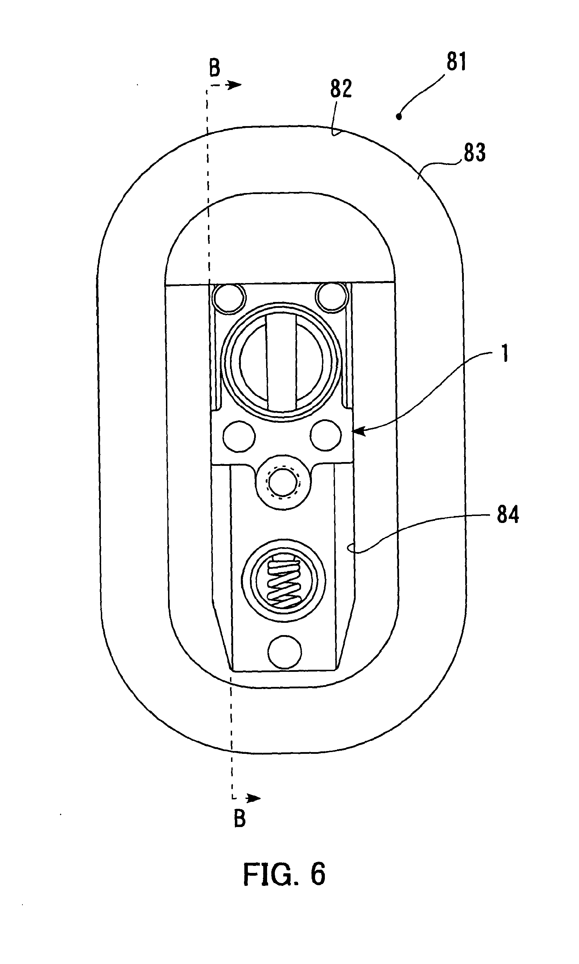

In Fig. 6, the expansion valve 1 is fixed to an elliptic hole 82 formed in a partition wall 81 between the vehicle compartment and the engine room, via the fire wall member 83 made e.g. of rubber or sponge. The fire wall member 83 is formed of a hollow cylindrical body having an elliptic outer shape complementary to the hole 82. A square hole 84 is formed in the center of the fire wall member 83 along the outer shape of the expansion valve 1.

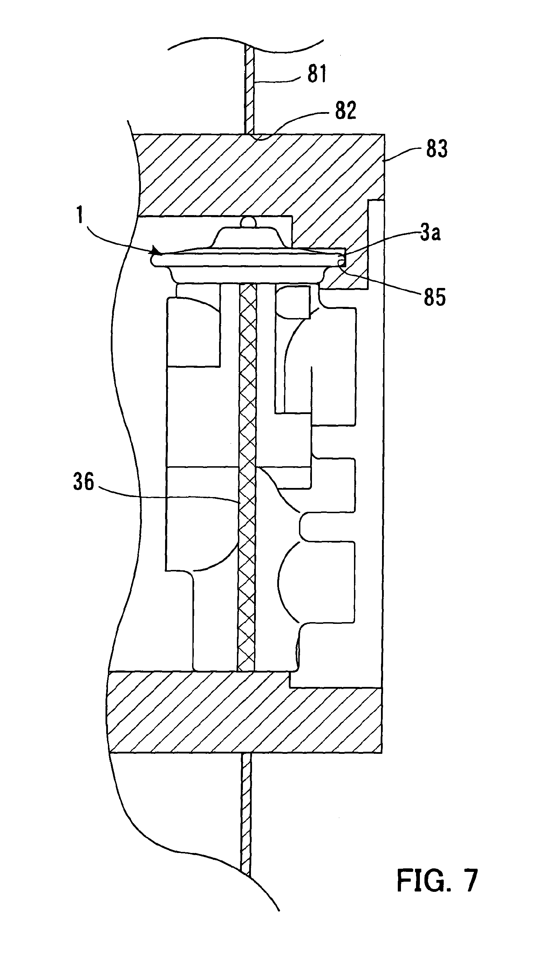

In Fig. 7, the expansion valve 1 can be fixed to the existing fire wall member 83 by the mounting surfaces 36 (shown hatched for clarity) on the body 2. The position of the expansion valve 1 in the front-rear direction thereof is fixed by fitting a flange portion 3a of the power element 3 in a groove 85 formed in the fire wall member 83. Pipes, not shown, may be connected to the vehicle compartment side of the expansion valve 1 to support the expansion valve 1.

In the expansion valve 1 in Fig. 4 the power element 3 is sensing pressure and temperature of refrigerant returning through the second passage 9 from the evaporator. When the temperature is high or when the pressure is low, the valve element 12 is pushed by the shaft 24 in valve-opening direction to increase the lift of the valve element 12 from the valve seat 10. When the temperature is low or when the pressure is high, the valve element 12 is moved in valve-closing direction to decrease the lift of the valve element 12. Thus, the valve lift of the expansion valve 1 is controlled. Liquid refrigerant supplied from the receiver flows through the port 4 into a space where the valve element 12 is located, and passes through the valve-lift controlled valve section. The liquid refrigerant is throttled and expanded into low-temperature, low-pressure refrigerant, supplied from the port 5 to the evaporator. Where the refrigerant exchanges heat with air in the vehicle compartment, and returns to the port 6. At this time, the expansion valve 1 controls the flow rate to the evaporator such that refrigerant in the outlet of the evaporator has a predetermined degree of superheat, and hence refrigerant returns from the evaporator to the compressor in a completely evaporated state.

As the body 2 is formed by die casting an aluminum alloy, it is possible to easily manufacture the body 2 even when it has a complicated shape with a large number of lightening portions, as mentioned. Although it is difficult to form lightening portions in side surfaces of the body 2 in directions orthogonal to each other, e.g. by extrusion molding, it is easy to form them by die casting. As a result, it is possible to enhance the degree of freedom of the shape of the body 2, and to reduce the weight of the expansion valve 1 to a large extent.

Further, it is possible to easily form component parts, such as the valve section including the valve seat 10 and the valve hole 11, the sealing surfaces formed at the ends of the first and second passages 8, 9, and the mounting surfaces 36. Therefore, it is possible to enhance manufacturing efficiency of the body 2. Furthermore, compared with extrusion and the like, it is possible to largely reduce cutting processes and enhance yield from material, thereby making it possible to reduce the manufacturing costs of the expansion valve 1. Further, aluminum alloys have higher hardness and strength than resin materials, and can be relatively easily plastically deformed. Therefore, it is possible to accurately perform coining of the valve section with ease. As a result, it is possible to positively prevent leakages through the valve section, and to reduce flow noises already by the material choice.

It should be noted that although in the present embodiment, the flat surfaces 37 and the mounting surfaces 36 are formed on the body 2 by taking the transfer of the expansion valve 1 and the mounting of the same on a vehicle into account, by way of example, the flat surfaces 37 and the mounting surfaces 36 can be omitted according to how the expansion valve 1 is transferred and how it is mounted.

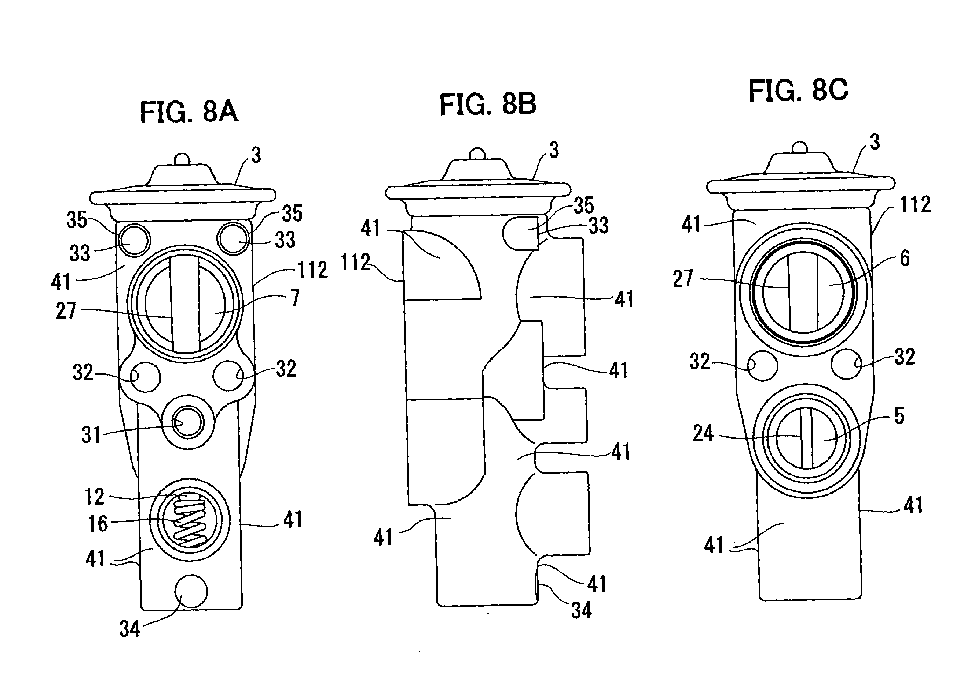

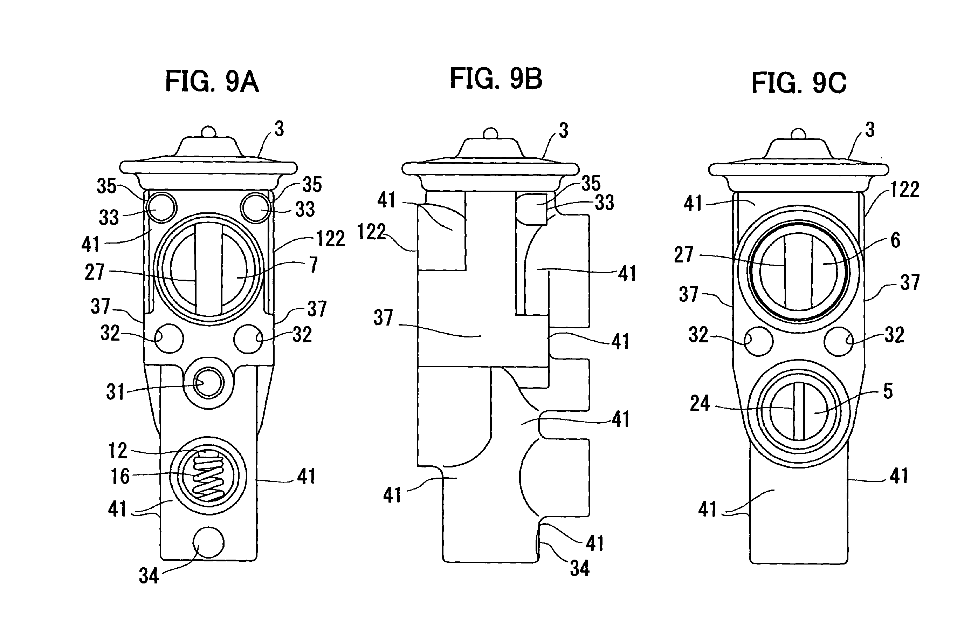

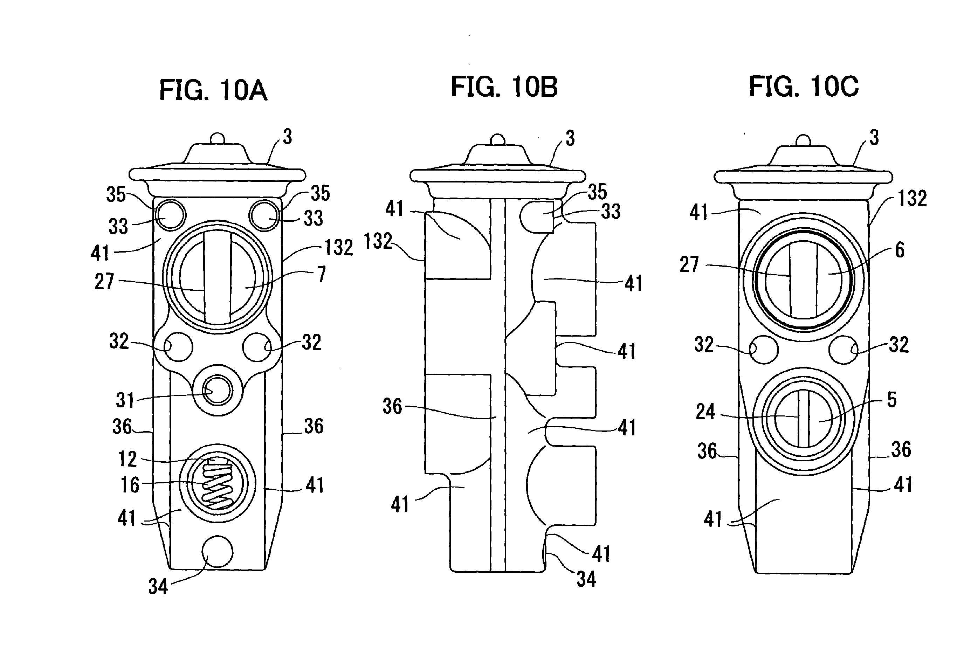

As shown in the variations of Figs. 8A to 8C, the body 2 may be replaced by a body 112 in which the flat surfaces 37 and the mounting surfaces 36 are omitted. Further, as in Figs. 9A to 9C, the body 2 may be replaced by a body 122 in which the mounting surfaces 36 are omitted while the flat surfaces 37 are kept. Furthermore, in Figs. 10A to 10C, the body 2 may be replaced by a body 132 in which the flat surfaces 37 are omitted while the mounting surfaces 36 are kept.

With the above constructions, it is possible to reduce the amount of used aluminum alloy to thereby reduce the manufacturing costs of the expansion valve 1 and further lighten the expansion valve 1.

It should be noted although in the above-described embodiment and variations, the internal threads in the communication holes 13 and 18 and in the screw hole 31 are cut in the last step of manufacturing the body 2, this is not limitative. Instead the threads as well may be formed integrally with the body 2 by die casting, e.g. using a mandrel having an external thread (in this case, the mandrel is removed while being rotated). Further, the portion for the O ring 23 and the through hole 25 may also be formed integrally with the body 2 solely by die casting. Further, although in Fig. 5, the adjustment part is formed by inserting the mandrel 70 from below a joining portion where the first mold 50 and the second mold 60 are joined to each other, this is not limitative but another mandrel, for example, may also be inserted from above the joining portion to thereby form the temperature-sensing part as well by die casting.

Further, although in the above-described embodiment and variations, die casting the body 2 of an aluminum alloy is applied to produce a temperature expansion valve, the method can be applied as well when producing an expansion valve of an electromagnetic type or the like. Further, the respective body 2 instead can be die- cast of a zinc alloy, a magnesium alloy, a copper alloy, or another metal as well as an aluminum alloy.

Further, although in the above-described embodiment and variations, the valve section including the valve seat 10 and the valve hole 11 is die-cast integrally with the body 2, this is not limitative. In order to enhance the forming accuracy of the valve section, a finishing process, such as further turning or milling of surfaces of the valve section, may be carried out. Even when such a finishing process is performed, since the valve section is substantially formed by die casting, it is possible to obtain the same merits.

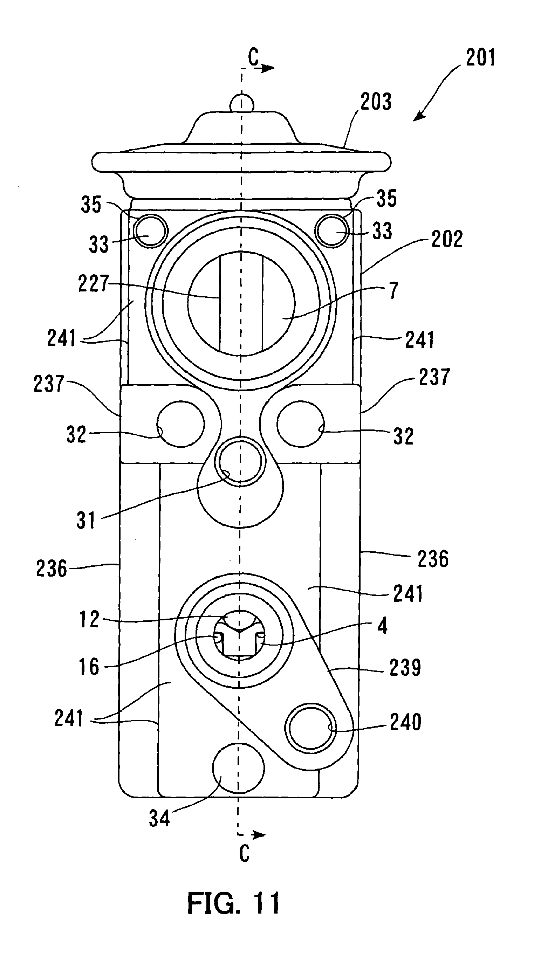

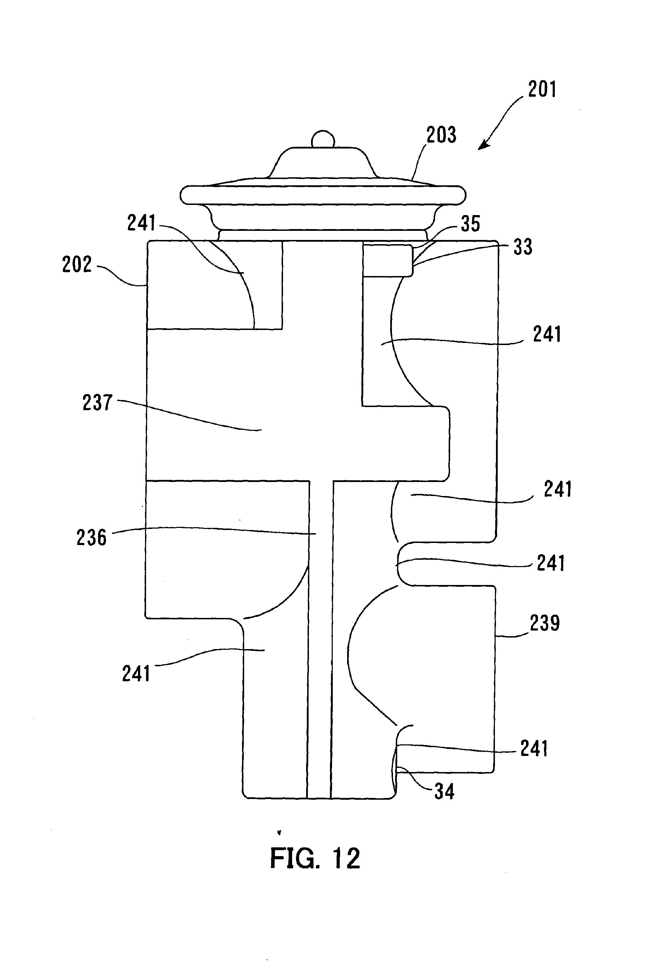

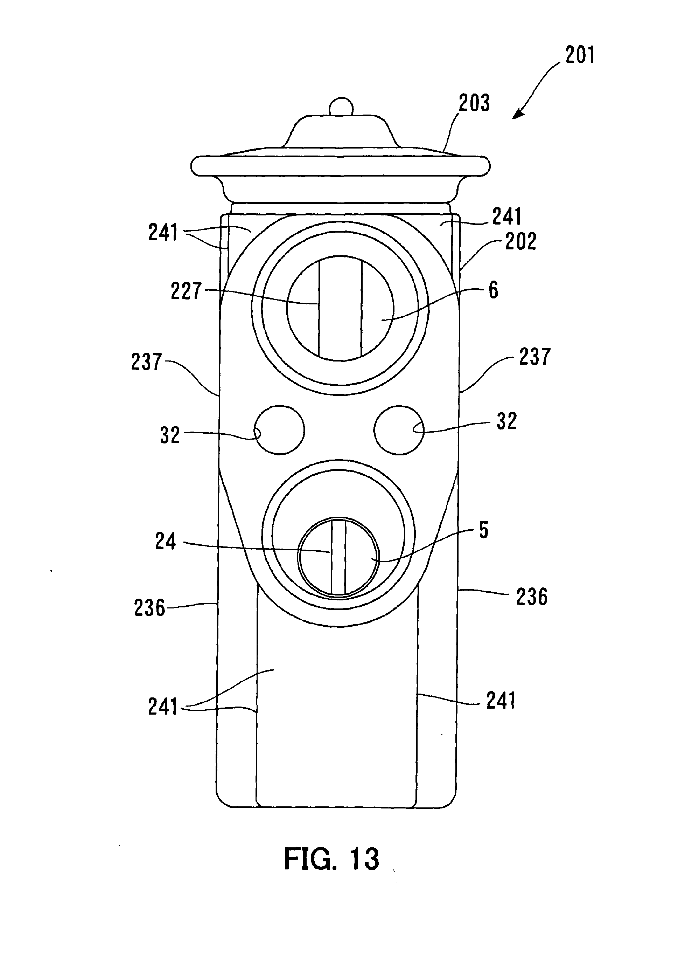

The expansion valve 201 of Figs. 11 to 13 has an aluminum alloy die-cast body 202. The body 202 is generally prism-shaped, and has lightening portions formed all over its side surfaces.

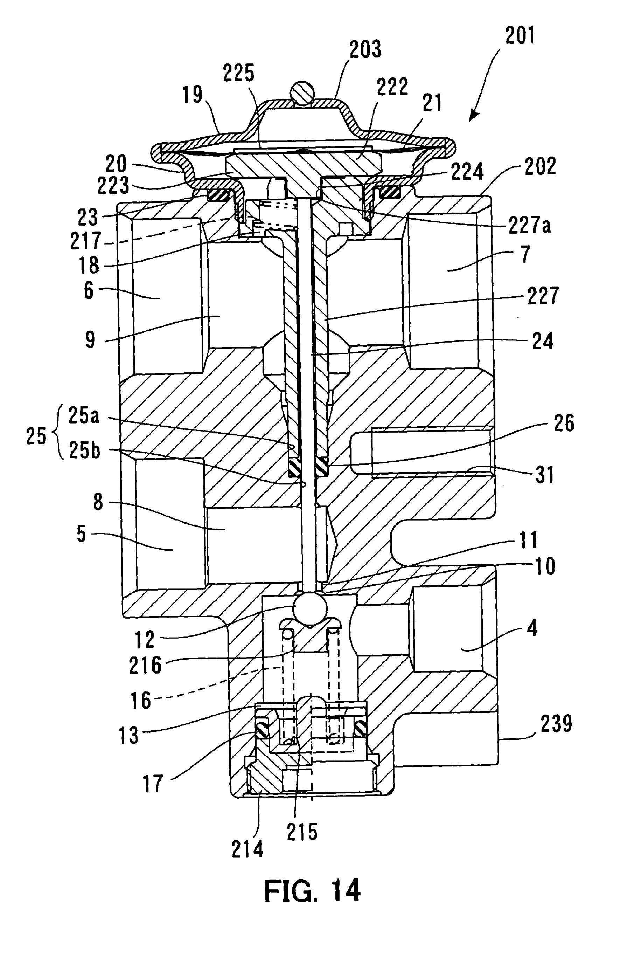

In Fig. 14, in the expansion valve 201, the ball-shaped valve element 12 is supported by a valve element receiver 216. A spring receiver 215 having an annular groove in a foremost end face thereof is fitted on a foremost end of an adjustment screw 214 which seals the communication hole 13 of the body 202. The helical compression spring 16 between the spring receiver 215 and the valve element receiver 216 has the valve element receiver 216 inserted into one end, and the other end is inserted into the groove of the spring receiver 215, for urging the valve element 12 via the valve element receiver 216 in valve closing direction toward the valve seat 10. The adjustment screw 214 allows to adjust the load of the helical compression spring 16.

An upper portion of the shaft 24 is held by a holder 227 which crosses the second passage 9. A coil spring 217 urges the shaft 24 is lateral direction is disposed at an upper portion of the holder 227. This lateral load applied to the shaft 24 inhibits a too sensitive reaction of the shaft 24. In short, the coil spring 217 forms a vibration suppressing mechanism for suppressing generation of untoward vibration noise caused by axial vibrations of the shaft 24.

A disk 222 of a power element 203 has a disk-shaped body formed by forging an aluminum material such that an upper half of the disk 222 radially outwardly extends to form a flange portion 223. The flange portion 223 has a lower end face formed with communication grooves, not shown, extending in radial directions such that refrigerant from the second passage 9 passes through to the lower surface of the diaphragm 21 inside the lower housing 20. An integrated engaging protrusion 224 protrudes from the center of the lower surface of the disk 222 and abuts on an upper end of the shaft 24, while being guided by an engaging groove 227a in the upper end of the holder 227. A root portion of the engaging protrusion 224 engages of an upper end face of the holder 227 to define the bottom dead center of the disk 222. Further, a pad 225 is disposed on a surface of the diaphragm 21 opposite from the disk 222 (on the temperature sensing chamber side) such that liquid contents can be held at the disk 222 even when the temperature-sensing gas is condensed.

In Figs. 11 to 13 the body 202 has mounting surfaces 236 and flat surfaces 237 formed on left and right side surfaces. On a side surface of the body 202 where the port 4 opens, an ear-shaped inflated portion 239 extends from the opening of the port 4. The inflated portion 239 is die-cast when the body 202 is formed by die casting, and has a foremost end thereof extending more outwardly than a side surface on one side parallel to the first passage 8 of the body 202. The foremost end of the inflated portion 239 is formed with a threaded hole 240 (through hole) into which a fastening bolt will be screwed when a joint for a pipe connected to a receiver, not shown, is connected to the port 4.

Furthermore, the body 202 has a plurality of the lightening portions 41 in its side surfaces namely in portions of the left and right side surfaces of the body 202, except for portions formed with the mounting surfaces 236 and the flat surfaces 237, further in portions of the side surfaces of the body 202 orthogonal to these faces 236 and 237, except for the rims of the first passage 8, the second passage 9, and the screw hole 31, and the inflated portion 239. Even the lightening portions having the above-described relatively complicated shapes can be easily formed by die casting. In manufacturing the expansion valve 201, the die casting is executed using a mold having approximately the same construction as that of the mold shown in Fig. 5 though the shapes of the chambers are different, and the same aluminum alloy as used in the first embodiment is used.

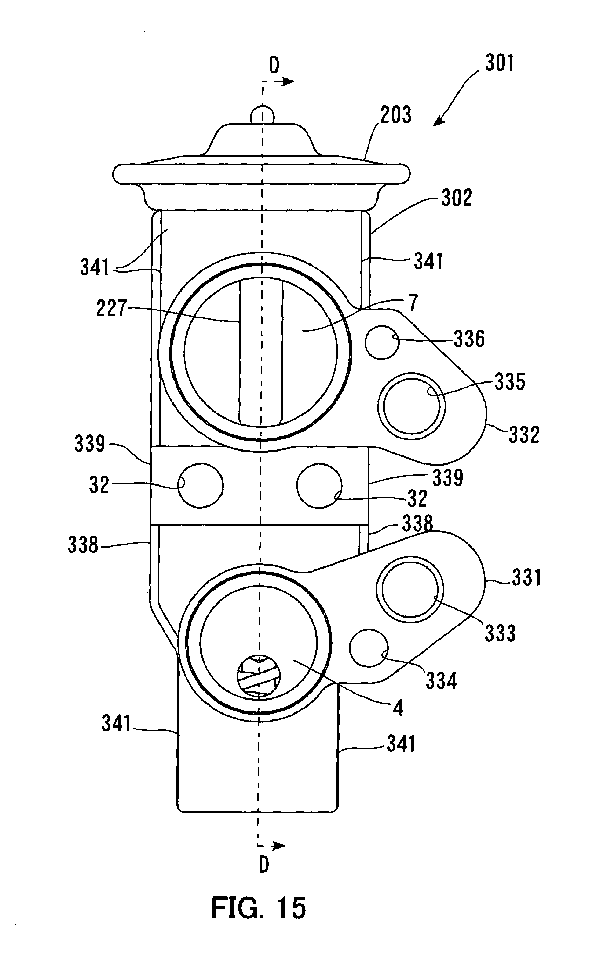

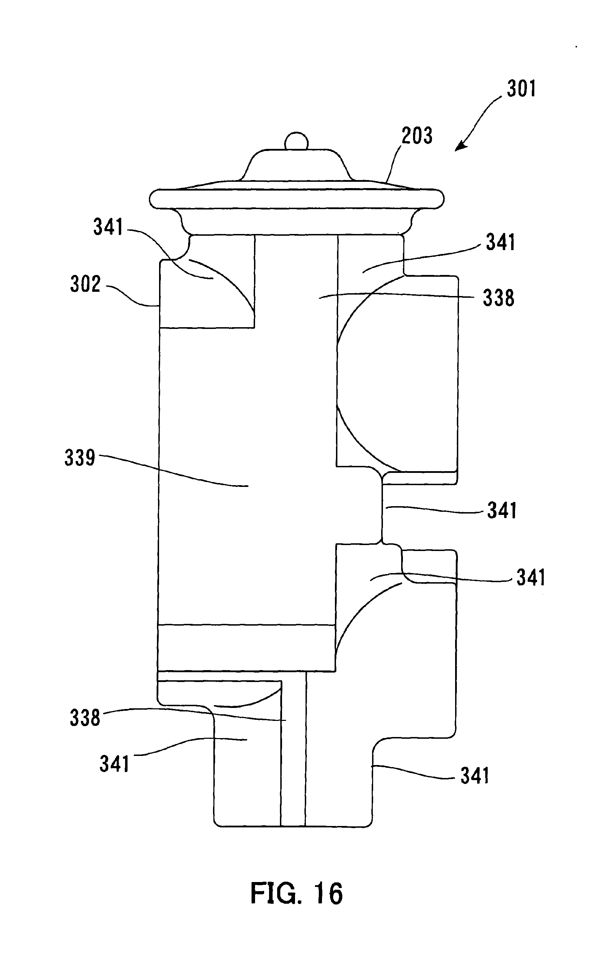

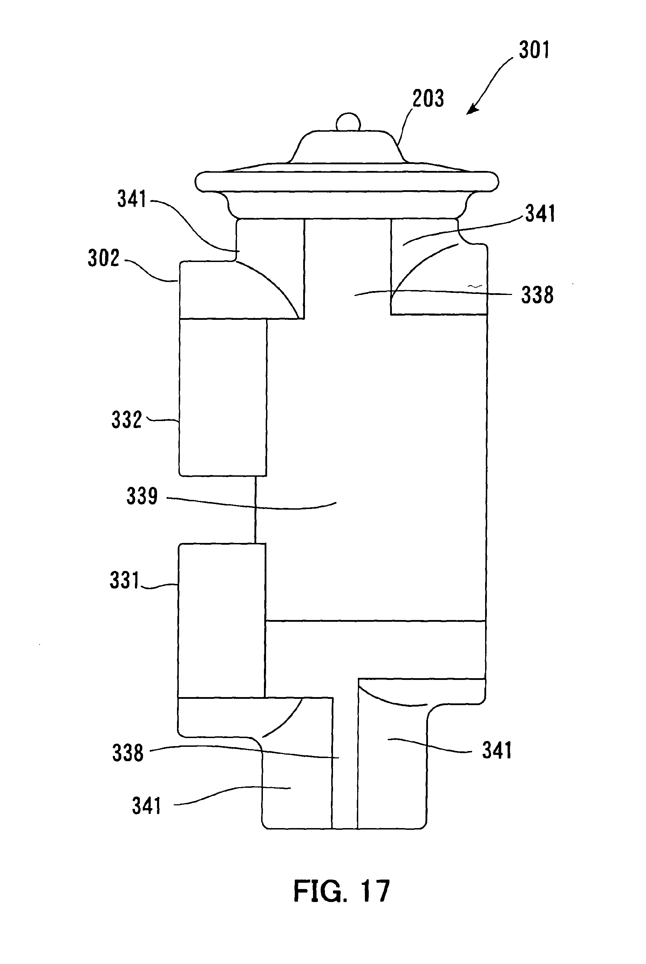

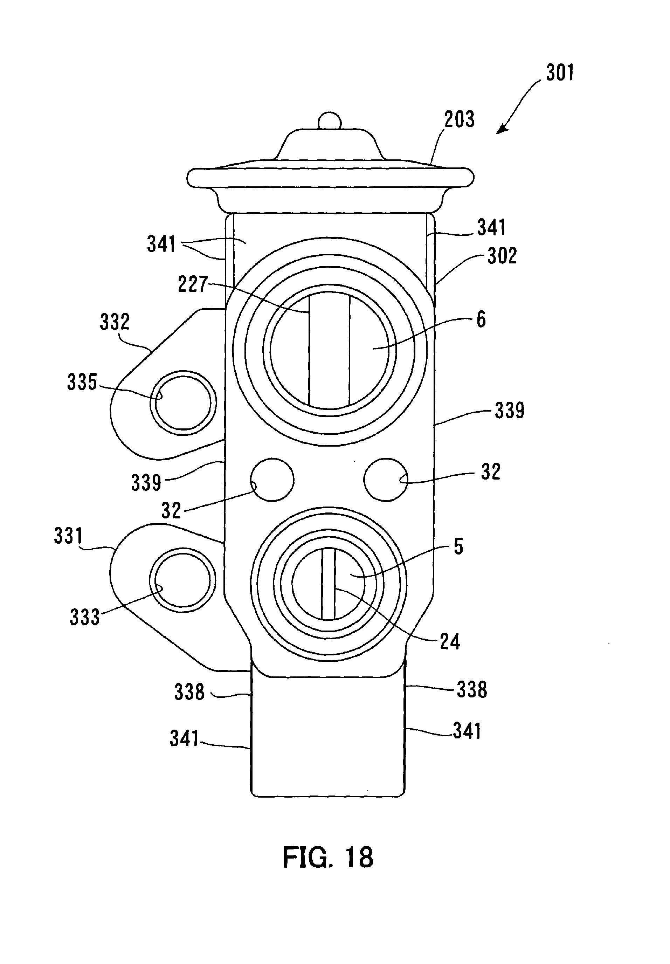

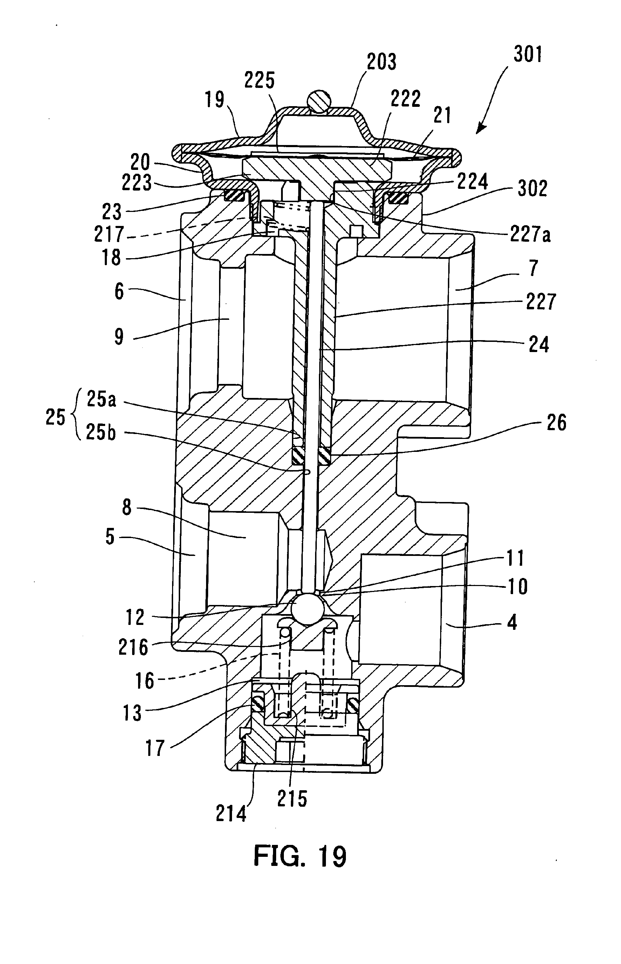

The expansion valve 301 in Figs. 15 to 18 has a die-cast body 302. Although the body 302 is generally prism-shaped, it has ear-shaped inflated portions 331 and 332 extending from openings of the ports 4 and 7 formed in side surfaces of the body 302. The inflated portions 331 and 332 are formed at the same time when the body 302 is formed by die casting, such that their foremost ends extend more outwardly than side surfaces on one side parallel to the first passage 8 and the second passage 9 of the body 302, respectively. The foremost end of the inflated portion 331 has a threaded hole 333 (through hole) into which a fastening bolt is screwed when a joint for a pipe connected to a receiver, not shown, is connected to the port 4. Further, an insertion hole 334 for inserting a positioning pin when the joint is connected is formed adjacent to the screw hole 333. Further, the foremost end of the inflated portion 332 is formed with a threaded hole 335 into which a fastening bolt is screwed when a joint for a pipe connected to a compressor, not shown, is connected to the port 7. Further, an insertion hole 336 for inserting a positioning pin when the joint is connected is formed adjacent to the threaded hole 335. In Fig. 19, the expansion valve 301 has approximately the same internal construction as the second embodiment. The positioning pin even may be die cast unitarily with the respected inflated portion 332, 331.

In Figs. 15 to 18, the body 302 as well has mounting surfaces 338 and flat surfaces 339 formed on left and right side surfaces. A plurality of lightening portions is formed in side surfaces of the body 302. The lightening portions 341 are formed in portions of the left and right side surfaces of the body 302, except the portions having the mounting surfaces 338 and the flat surfaces 339, further in portions of side surfaces of the body 302 orthogonal to these faces 338 and 339, except for the respective rims of the first passage 8, the second passage 9, and the threaded hole 31, and the outer peripheries of the inflated portions 331 and 332. Even such lightening portions having relatively complicated shapes, can be easily formed by die casting.

The expansion valve 301 is manufactured by die casting an aluminum alloy, similarly to the first embodiment.

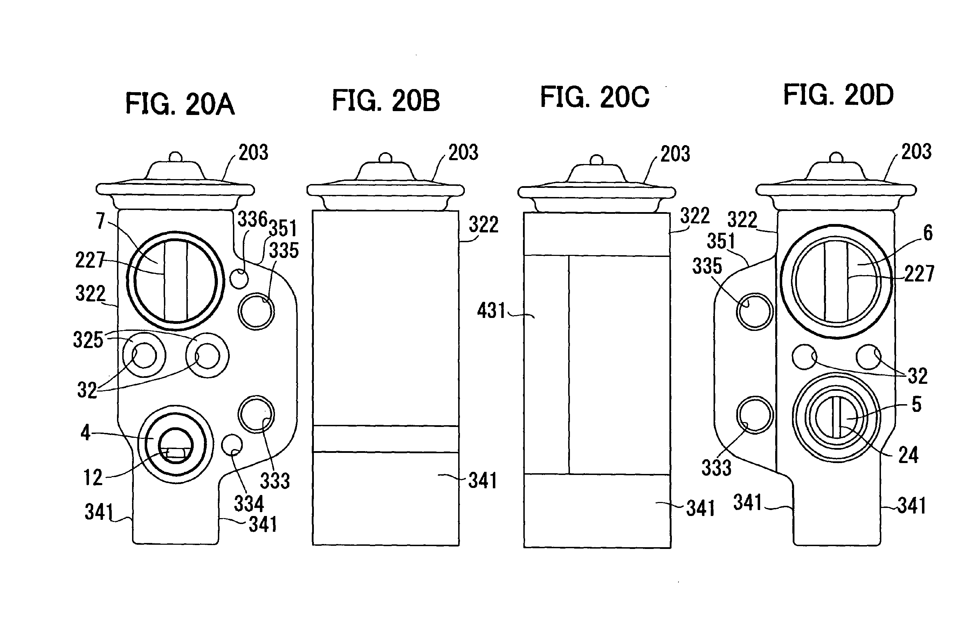

Figs. 20A to 20D explain a variation of the third embodiment. A die-cast body 322 is formed with almost no or only a few lightening portions 341. Although the body 322 is generally prism-shaped, it has an ear-shaped inflated portion 351 formed along a side surface where the ports 4 and 7 open, in a manner extending from the side surface at right angles. The inflated portion 351 has a threaded hole 333 and an insertion hole 334 in the vicinity of the port 4, and a threaded hole 335 and an insertion hole 336 formed in the vicinity of the port 7. Further, formed around the pair of dummy holes 32 arranged in the side surface are countersinks 325 for accommodating the heads of bolts inserted into the dummy holes 32.

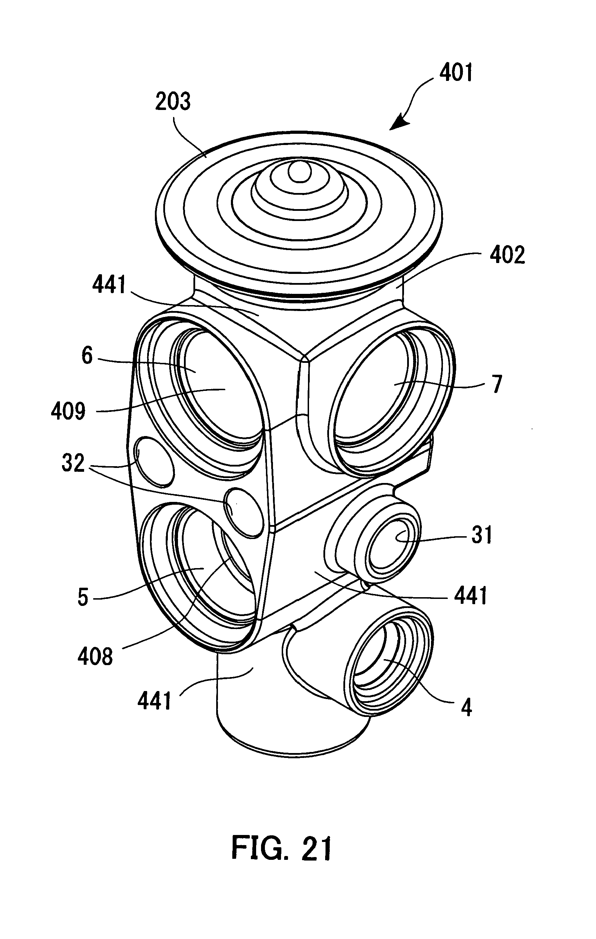

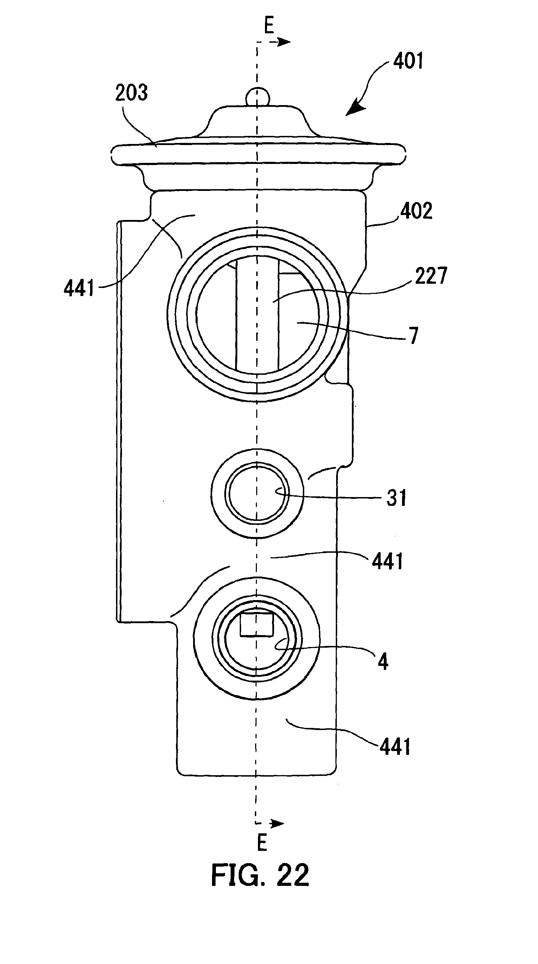

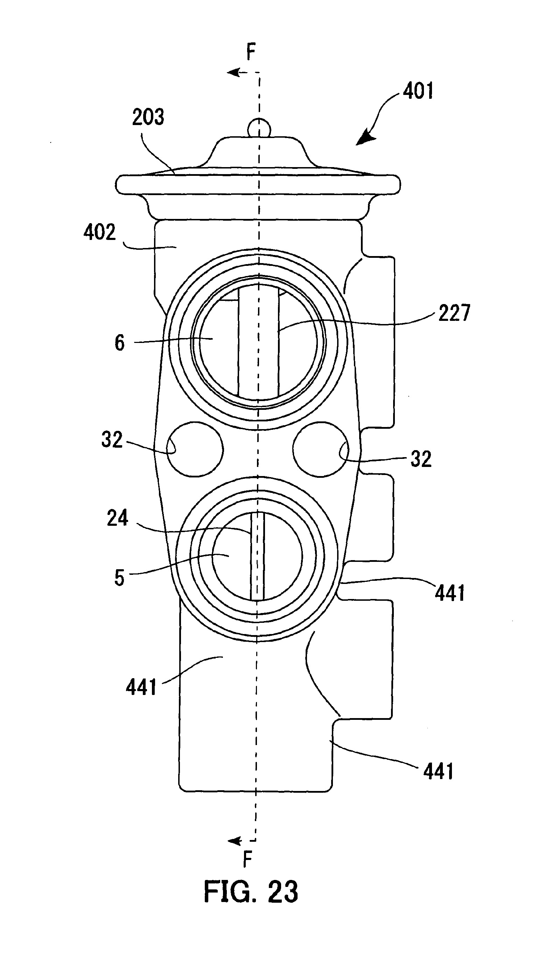

In a body 402 of the expansion valve 401 of Figs. 21 to 23, a portion of a passage where the port 4 is located and a portion of a passage where the port 5 is located cross each other, while a portion of a passage where the port 6 is located and a portion of a passage where the port 7 is located cross each other. The ports 5 and 6 open in a side surface adjacent to a side surface where the ports 4 and 7 open. That is, the body 402 is configured such that the first passage 408 and the second passage 409 are bent through 90 degrees inside the body 402, and the pipes connected to the receiver and the compressor, not shown, respectively, are connected to the expansion valve 401, at an angle 90 degrees shifted from the direction of the pipe connected to the evaporator. Lightening portions 441 are formed at a plurality of locations, such as around the ports in the surfaces of the die-cast body 402.

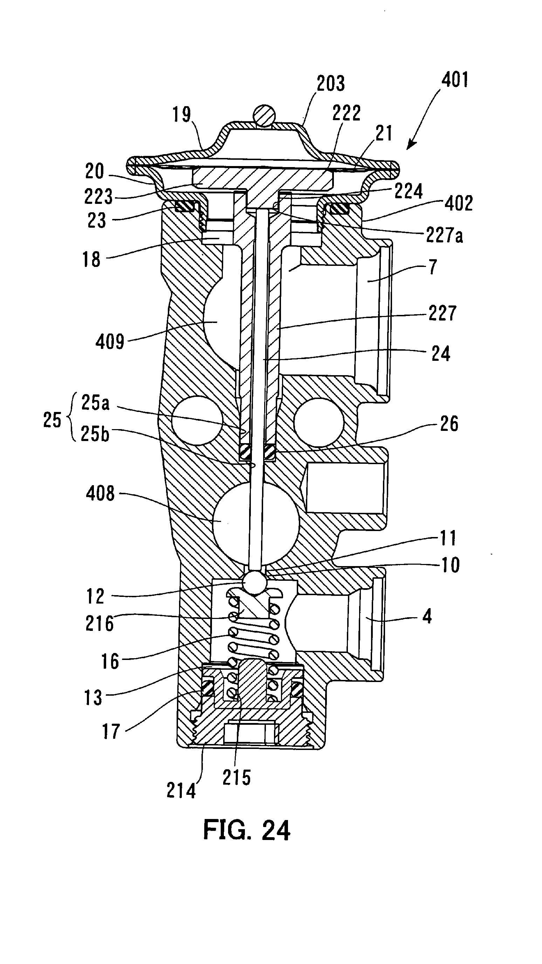

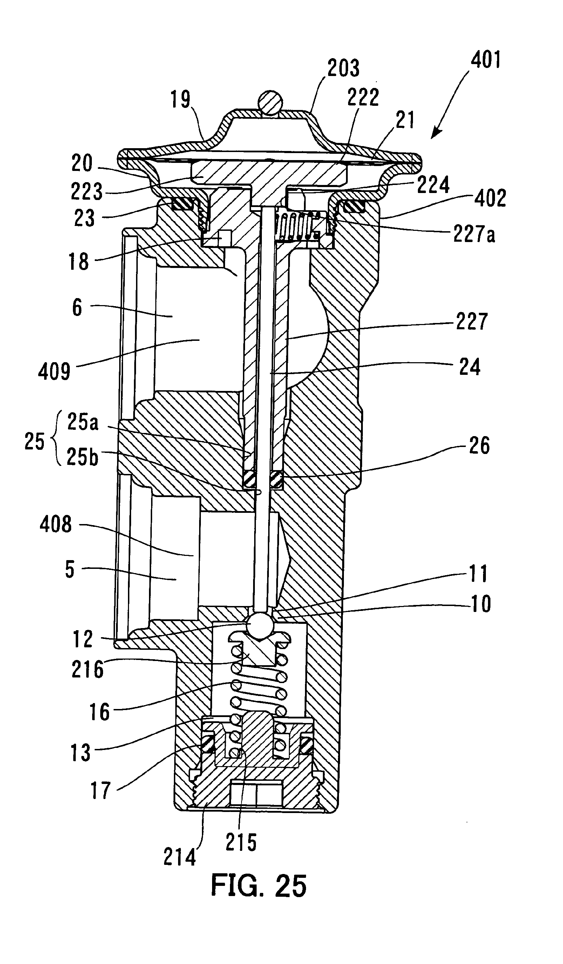

In Figs. 24 and 25, a first passage 408 and a second passage 409 bend through 90 degrees in the center of the body 402. As a result, refrigerant introduced from the receiver, not shown, into the port 4 is turned through 90 degrees within the body 402 and is delivered from the port 5, while refrigerant introduced into the port 6 after being returned from the evaporator is turned through 90 degrees within the body 402 and is delivered from the port 7.

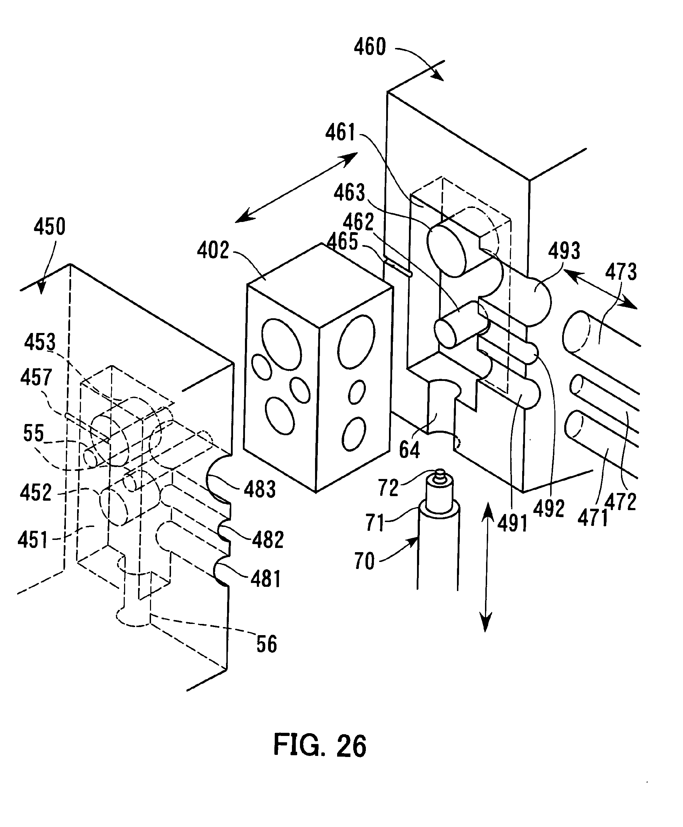

The expansion valve 401 of Figs. 21 to 26 is manufactured by die casting a main body 402 of an aluminum alloy having the same composition as in the first embodiment, in an apparatus comprising a first mold 450, a second mold 460, a mandrel 70, and mandrels 471 to 473, (Fig. 26). The first mold 450 has a chamber 451 forming the left half of the body 402. Within the chamber 451, port-forming portions 452 and 453 for forming the ports 5 and 6, respectively, and the dummy hole-forming portions 55 for forming the dummy holes 32 protrude toward the opening on the rear side. Further, the mandrel inserting portion-forming groove 56 and an injection passage-forming groove 457 are formed in the rear surface of the first mold 450. Mandrel inserting portion-forming grooves 481, 482, and 483 for forming insertion holes for inserting the mandrels 471, 472, and 473 from a side, respectively, are formed in the rear surface of the first mold 450. The mandrel 471 forms the port 4, the mandrel 472 forms a pilot hole of the threaded hole 31, and the mandrel 473 forms the port 7. The mandrel inserting portion-forming grooves 481, 482, and 483 extend approximately at right angles to the port-forming portions 452 and 453.

The second mold 460 has a chamber 461 for molding the right half of the body 402. Within the chamber 461, a port-forming portion 462 for forming the port 5 in cooperation with the port-forming portion 452, and a port-forming portion 463 for forming the port 6 in cooperation with the port-forming portion 453 protrude toward the opening. Further, mandrel inserting portion-forming grooves 491, 492, and 493 for forming the insertion holes for inserting the mandrels 471, 472, and 473 are formed in the front surface of the second mold 460 in a manner opposed to the mandrel inserting portion-forming grooves 481, 482, and 483. The mandrel inserting portion-forming grooves 491, 492, and 493 extend approximately at right angles to the port-forming portions 462 and 463. Furthermore, the mandrel inserting portion-forming groove 64 forming an insertion hole for inserting the mandrel 70 in cooperation with the mandrel inserting portion-forming groove 56, and an injection passage-forming groove 465 for forming an injection passage in cooperation with the injection passage-forming groove 457 are formed in the front surface of the second mold 460. In manufacturing the body 402 in the assembled mold, a molten aluminum alloy is injected through the injection passage. After the aluminum alloy is hardened, the mandrels 70 and 471 to 473 are removed, and the first and second molds 450, 460 are separated.

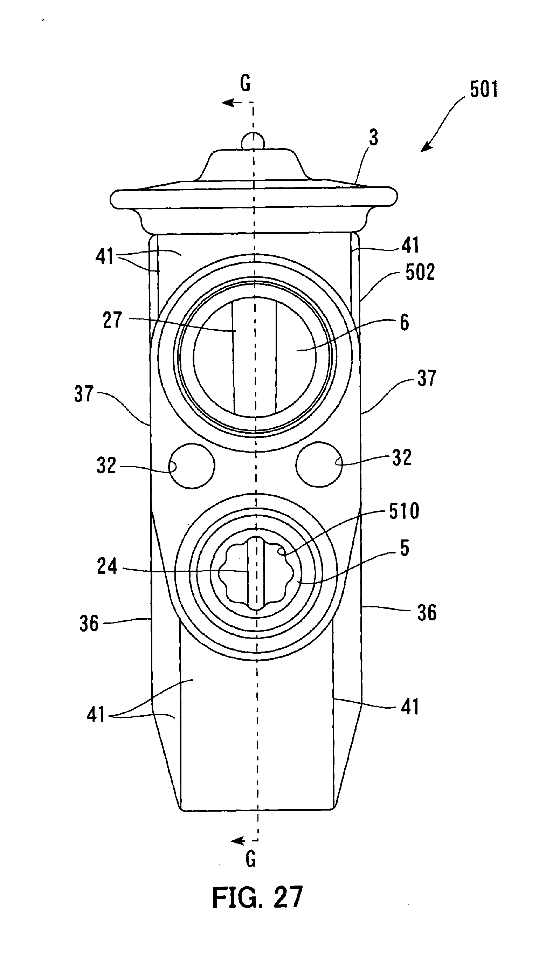

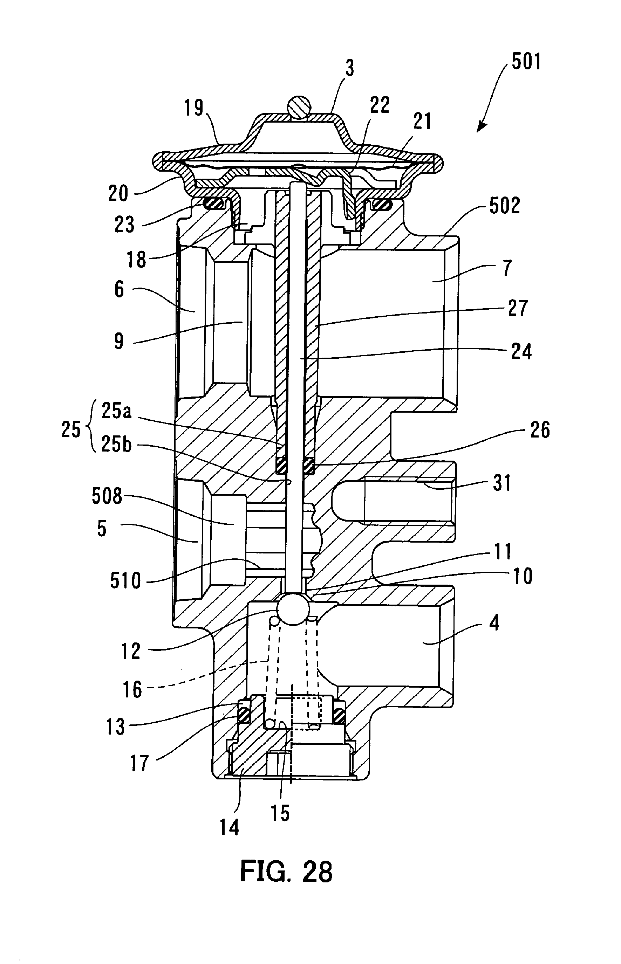

In Figs. 27 and 28, in a body 502 of the fifth embodiment of an expansion valve 501, a passage 510 having a wave-shaped pipe wall is formed on the outlet side of the valve hole 11 of a first passage 508, that is, on the side toward the port 5. Even such a complicated shape can be easily realized by die casting an aluminum alloy. To manufacture the expansion valve 501, it is only required that the port-forming portion 62 of the second mold 60 appearing in Fig. 5 is partially wave-shaped in cross section, for example. The shape of the pipe wall is not limited to the mentioned wave shape, but the pipe wall can have various shapes.

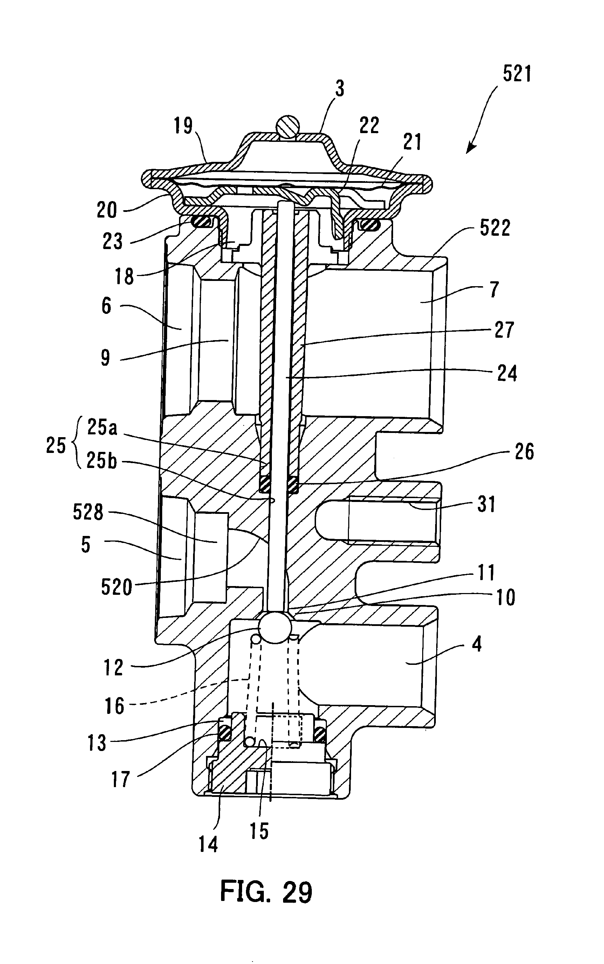

Fig. 29 shows a section of a variation of the fifth embodiment. In a body 522 of an expansion valve 521 of Fig. 29, a passage 520 having a smooth pipe wall with a curved surface is formed on the outlet side of the valve hole 11 of a first passage 528. The passage 520 is progressively expanded in cross section from the valve hole 11 side toward the port 5 side. Even such a shape can be easily realized by die casting of an aluminum alloy.

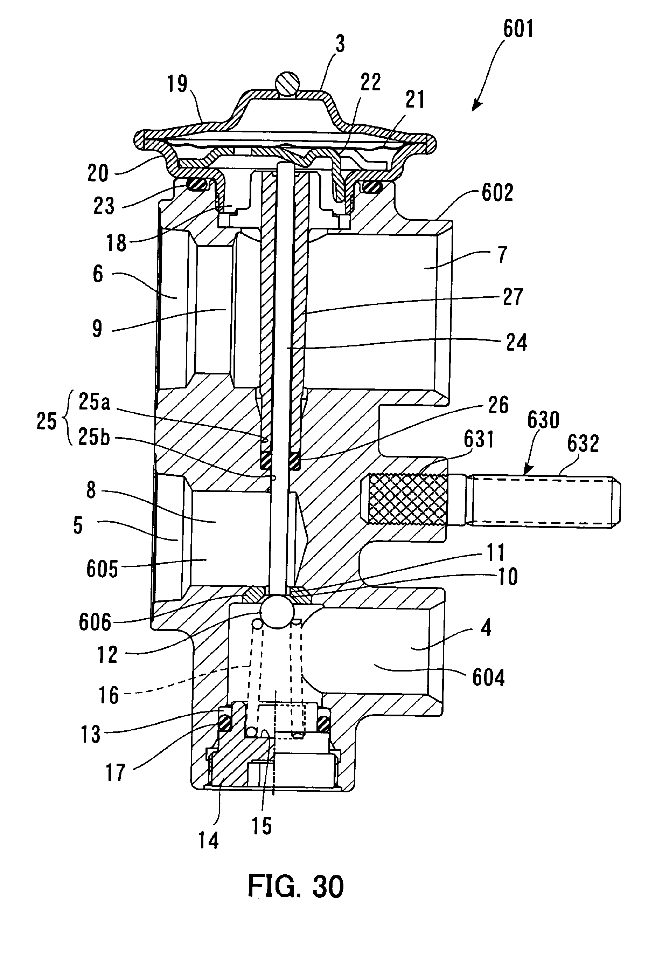

In the sixth embodiment of Fig. 30 a bolt and a valve seat-forming portion are separately prepared are integrally assembled to a body 602. In the body 602 of the expansion valve 601 of Fig. 30, a stud bolt 630 is formed by insert molding at a portion corresponding to the threaded hole 31 appearing in Fig. 4. The stud bolt 630 serves to fix a plate to the body 602, for connecting pipes connected to a compressor and a receiver to the associated ports. In Fig. 30, for clarity, the stud bolt 630 is shown in side view but not in cross section. One end of the stud bolt 630 is formed with a knurl 631, and a portion thereof exposed from the body 602 to the outside has an external thread 632. The stud bolt 630 is formed in advance before manufacturing the expansion valve 601.

Further, in the body 602, a prefabricated valve seat-forming member 606 for forming a valve seat is integrated by insert molding between an introduction passage 604 for introducing refrigerant to the upstream side of the valve section in the first passage 8 and a delivery passage 605 for delivering refrigerant from the downstream side of the valve section. The passages 604, 605 an extend along different axes, as shown in Fig. 30. The connecting valve hole 11 is orthogonal to the passages 604 and 605. The valve seat-forming member 606 is annular, and the valve hole 11 extends through the center of the valve seat-forming member 606. The lower half of the valve hole 11 has a tapered portion the outer diameter of which expands toward the lower end of the valve hole 11. The valve seat 10 for the valve element 12 is formed by the tapered face of the tapered portion. Before the body 602 is formed by die casting an aluminum alloy, the stud bolt 630 and the valve seat-forming member 606 are arranged at predetermined locations of the molds.

When the body 602 is formed by die casting, structures, such as the prefabricated stud bolt 630 and the valve seat-forming member 606, are insert-molded. So it is possible to easily integrate portions which otherwise are difficult to form by die casting alone in to the body 602, i.e. portions demanding accuracy, and portions made of materials different from that of the body 602 (e.g. portions demanding large strength). It is also not necessary to form a threaded hole for fixing the stud bolt or the like to the body 602, because e.g. the knurled portion 631 gets into a form-fit with the die-cast alloy.

Although, to prevent the insert-molded stud bolt 630 from rotating about its axis in the body 602, the knurl 631 having a jagged shape is formed on an inserting end portion of the stud bolt 630, this is not limitative, but the inserting end portion can be configured to have another rotation-preventing shape, such as a polygonal shape. Although a valve seat-forming member 606 is prefabricated with the valve hole 11 already, by way of example, instead a disk-shaped member without the valve hole 11 may be insert-molded when the body 602 is formed by die casting. The valve hole 11 then may be formed in the member later.

Further, although the passages 604, 605 extend along different axes, and are connected by the valve hole 11 orthogonal to the passages 604 and 605, instead for connecting the passages 604, 605, various constructions other than the illustrated example can be employed. For example, the introduction passage and the delivery passage may be configured such that the axis of at least one of them deviates in the vicinity of the valve section, such that extend along different axes in the vicinity of the valve section only, but are arranged on the same axis in the vicinity of their openings where they open to the outside. Further, the valve hole does not need to be orthogonal to each of the introduction passage and the delivery passage, but the valve hole only needs to have respective opposite ends connected to the passages.

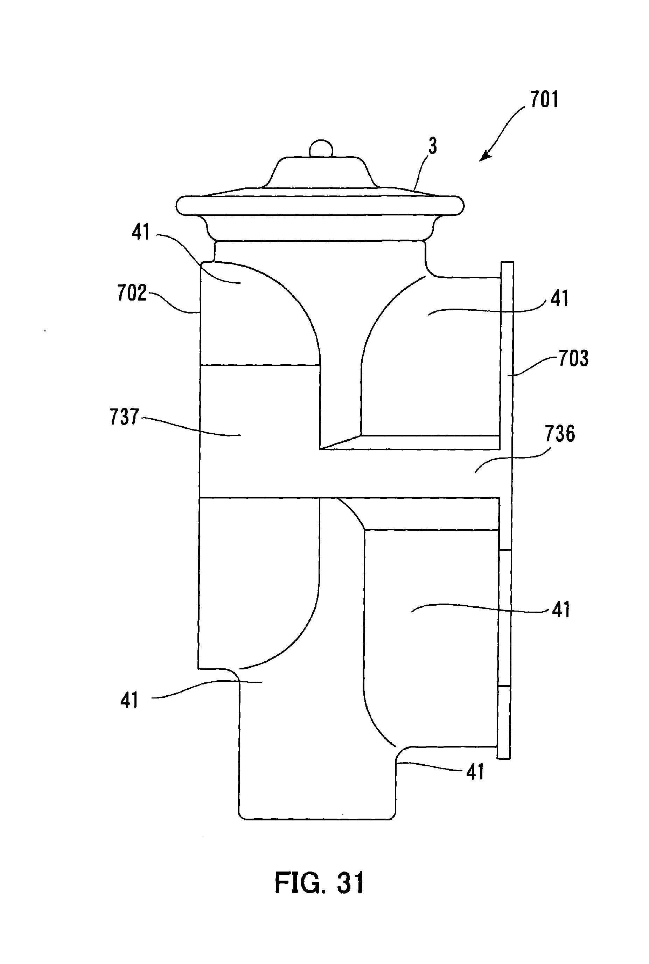

The expansion valve 701 in Fig. 31 has a mounting surface 736 fitting to a fire wall member provided between the vehicle compartment and the engine room, and flat surfaces 737 used as holders when the expansion valve 701 is carried by a mounting apparatus. The mounting surface 736 is formed at the front end of the body 702 in the front-rear direction thereof, i.e. along the outer peripheral surface of the engine room-side end of the body 702. At the front end of the body 702, a circumferential flange portion 703 extends outward from the body 702 along the outer periphery thereof. The body 702 including lightening portions 41 in the side surfaces is integrally formed by die casting of an aluminum alloy.

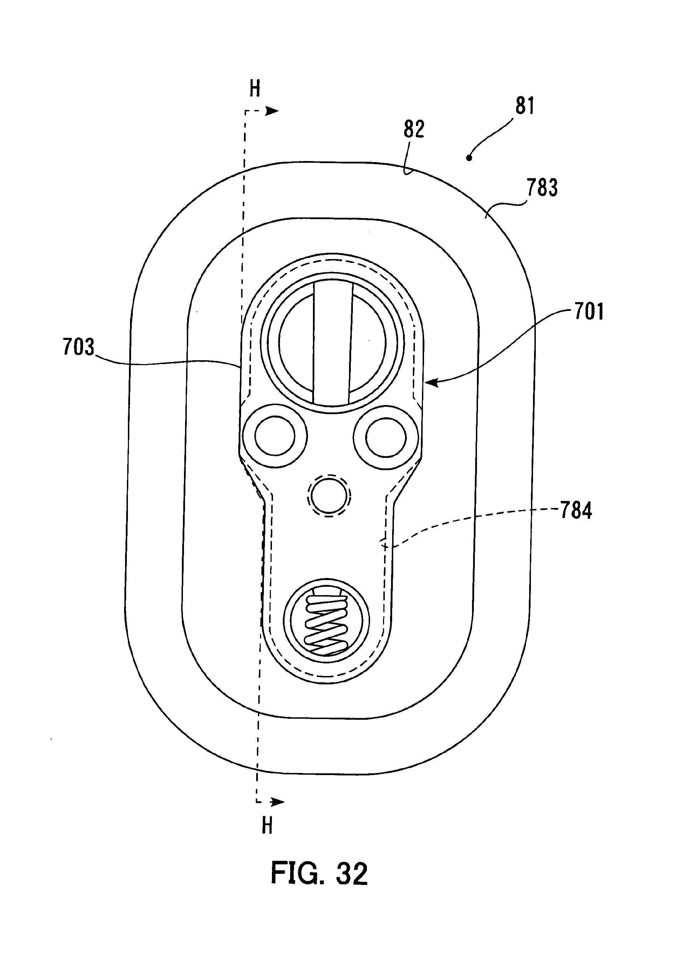

In Fig. 32, the expansion valve 701 is fixed to the elliptic hole 82 in the partition wall 81 between the vehicle compartment and the engine room, via a fire wall member 783 made e.g. of rubber or sponge. The fire wall member 783 is a hollow cylindrical body having an elliptic outer shape complementary to the hole 82. A supporting hole 784 is formed in the center of the fire wall member 783 along the outer shape of a front end of the expansion valve 701.

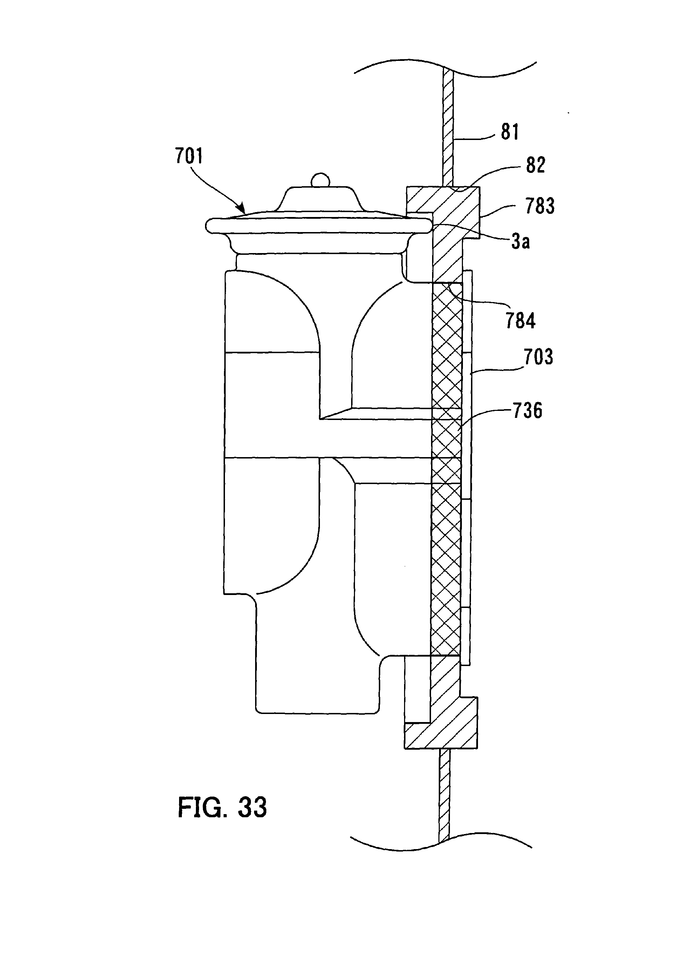

In Fig. 33, the expansion valve 701 is rigidly fixed to the fire wall member 783 by the mounting surface 736 (shown hatched for clarity) formed on the body 702. The expansion valve 701 is fixed to the fire wall member 783 by the flange portion 3a of the power element 3 and the flange portion 703 with the fire wall member 783 held therebetween. Approximately the whole expansion valve 701 is disposed within the vehicle compartment. The mounting surface 736 is formed on an end of the body 702. The expansion valve 701 is fixed in a manner sandwiching the fire wall member 783. This allows to use a fire wall member 783 which is compact in size.

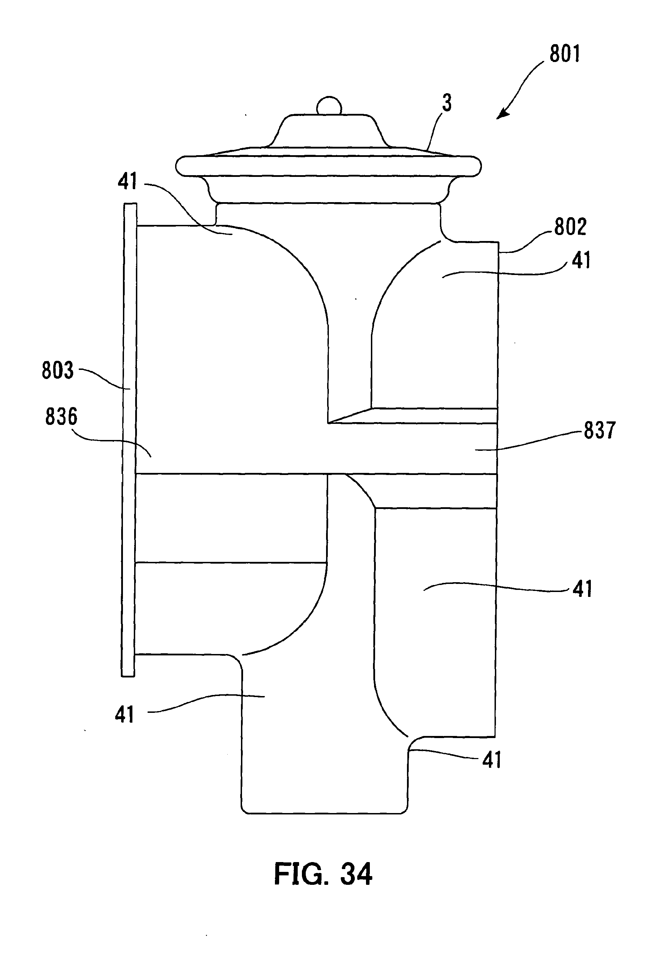

The expansion valve 801 of Figs. 34 to 36 is disposed outside of the vehicle compartment on the engine room side.

In Fig. 34, the expansion valve 801 has a mounting surface 836 to be mounted on a fire wall member, disposed between the vehicle compartment and the engine room, and a flat surface 837 used as holder when the expansion valve 801 is carried by a mounting apparatus. The mounting surface 836 is formed at the rear end of the body 802 in the front-rear direction thereof, i.e. along the outer peripheral surface of the compartment-side end of the body 802. The rear end of the body 802 has a circumferential peripheral flange portion 803 extending outward from the body 802. The body 802 including lightening portions 41 in the side surfaces is integrally formed by die casting of an aluminum alloy.

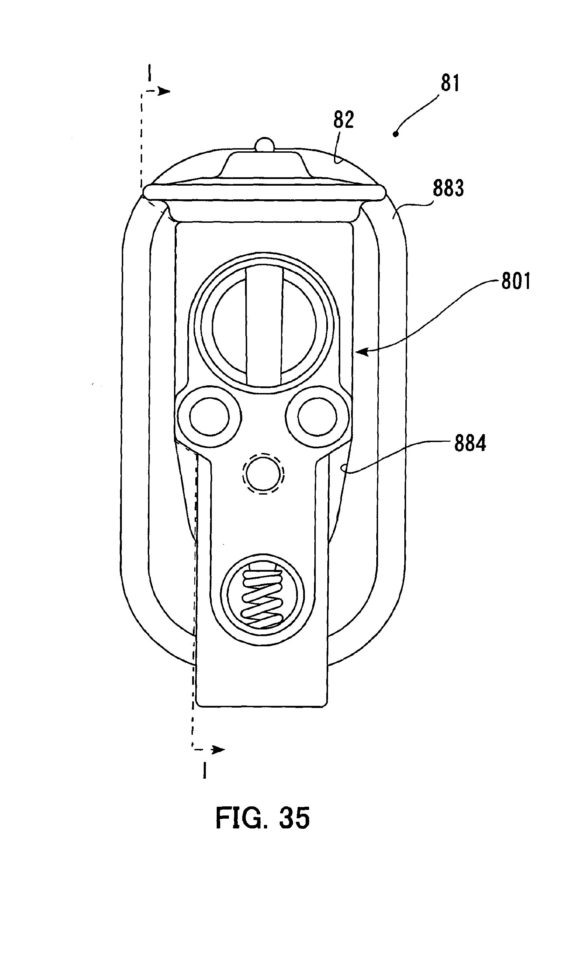

In Fig. 35, the expansion valve 801 is fixed to the elliptic hole 82 in the partition wall 81 between the vehicle compartment and the engine room, via a fire wall member 883 made e.g. of rubber or sponge. The fire wall member 883 is a hollow cylindrical body having an elliptic outer shape complementary to the hole 82. A supporting hole 884 is formed in the center of the fire wall member 883 along the outer shape of a rear end of the expansion valve 801.

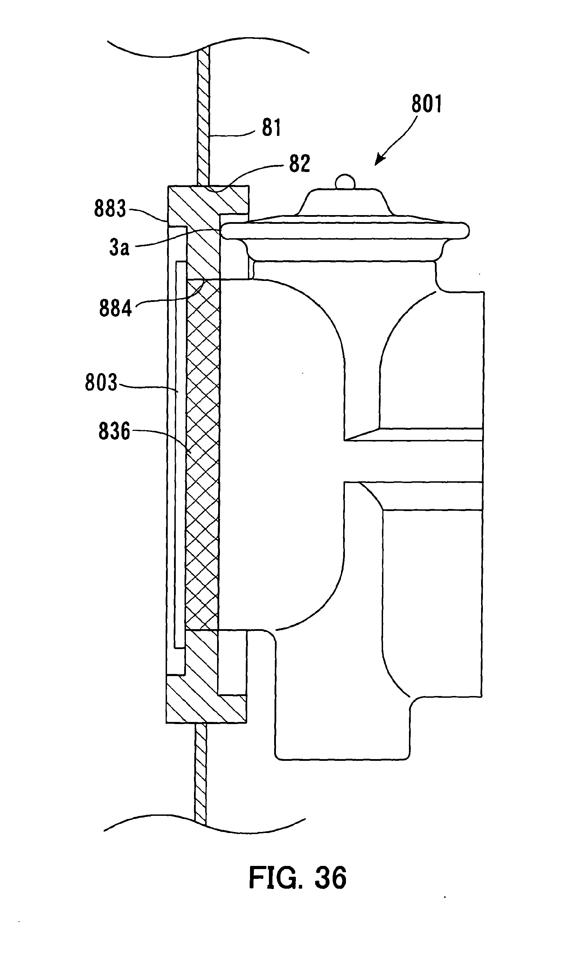

The expansion valve 801 in Fig. 36 is rigidly fixed to the fire wall member 883 by the mounting surface 836 (shown hatched for clarity) on the body 802, namely by the flange portion 3a of the power element 3 and the flange portion 803 which hold the fire wall member 883 therebetween.

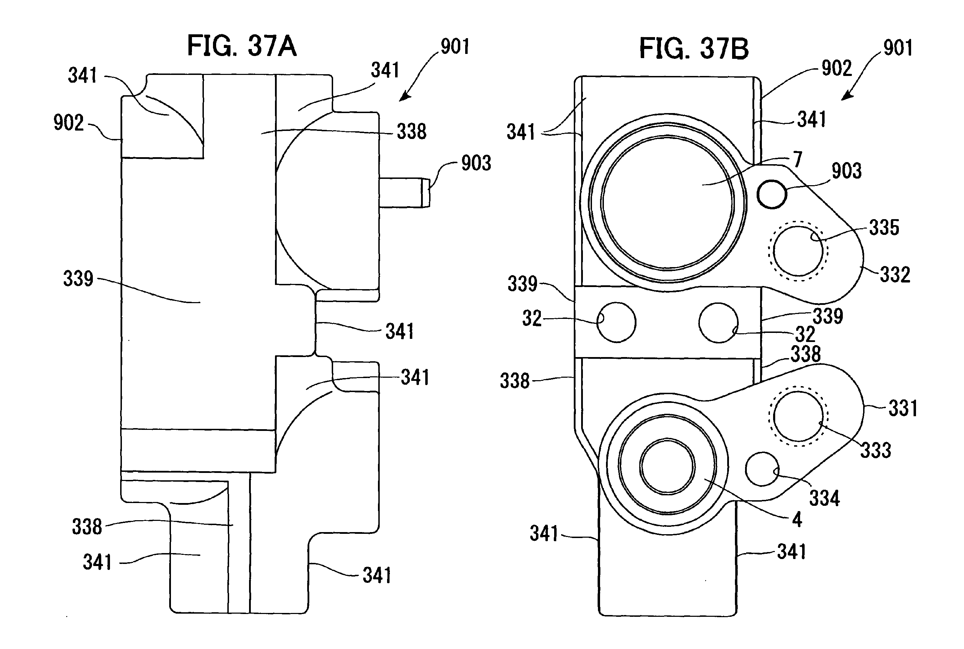

The expansion valve 901 of Figs. 37A, 37B, has the body 902 formed by die casting of an aluminum alloy. A cylindrical pin 903 protrudes from the inflated portion 332 extending from the body 902. The pin 903 is formed simultaneously with the inflated portion 332 and the like when the body 902 is formed by die casting. When a pipe connected to a receiver, not shown, is connected to the associated port, the pin 903 is used for positioning a joint for the pipe, between the body and the pipe.

Although one die-cast joint-positioning pin 903 is shown on the inflated portion 332, two or more pins 903 may be formed instead. Alternatively, the pin(s) may be formed on the inflated portion 331 or at portions of the body 902 different from the inflated portions 331 and 332. Forming the joint-positioning pin 903 integrally with the body 902 by die casting, allows to reduce man-hours for manufacturing the expansion valve compared with a process in which the joint-positioning pin is formed after molding the body, and eliminates the need of cumbersome operations for assembling the pin to the body.

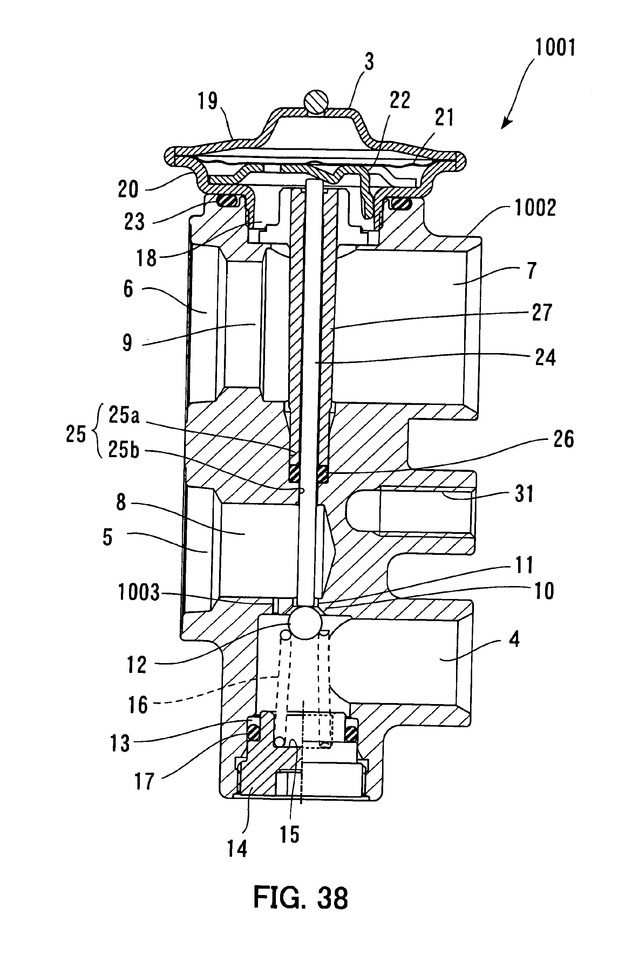

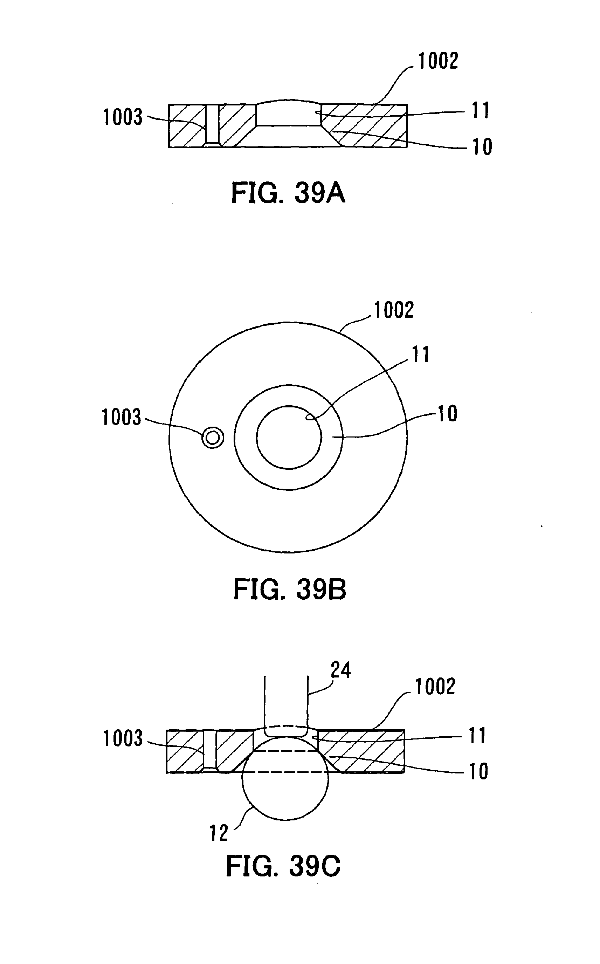

In Fig. 38, a bleed hole 1003 (corresponding to "the refrigerant leakage passage") is formed to extend through body 1002 of the expansion valve 1001 of Figs. 38, 39A, 39B, 39C in the vicinity of the valve hole 11 and in parallel with the valve hole 11.

In Figs. 39A and 39B, the bleed hole 1003 is a circular hole of a considerably smaller cross section than the valve hole 11. In Fig. 39C, even when the valve element 12 is seated on the valve seat 10 to close the valve hole 11 in the closed state of the valve section, a flow from the upstream side to the downstream side is assured through the bleed hole 1003 at a predetermined flow rate. This circulates a minimum amount of lubricating oil contained in the refrigerant to increase the amount of oil returning to the compressor. Further, when the expansion valve 1001 is used in a dual air conditioner vehicle, (air conditioners arranged in the front and the rear parts of the vehicle) it is possible to prevent that refrigerant remains stagnant in an evaporator in the vehicle rear part. The expansion valve 1001 is manufactured by die casting of an aluminum alloy. The bleed hole 1003 is formed when the body 1002 is integrally formed.

The formation of the bleed hole 1003 can be achieved by providing a not shown pin on the mandrel 70 in Fig. 5.

In the expansion valve 1001 the bleed hole 1003 as a part of the refrigerant leakage passage used when the valve section is closed is formed integrally with the body 1002 by die casting. This reduces man-hours for manufacturing the expansion valve compared with the conventional manufacturing process in which the bleed hole is formed by cutting after molding the body.

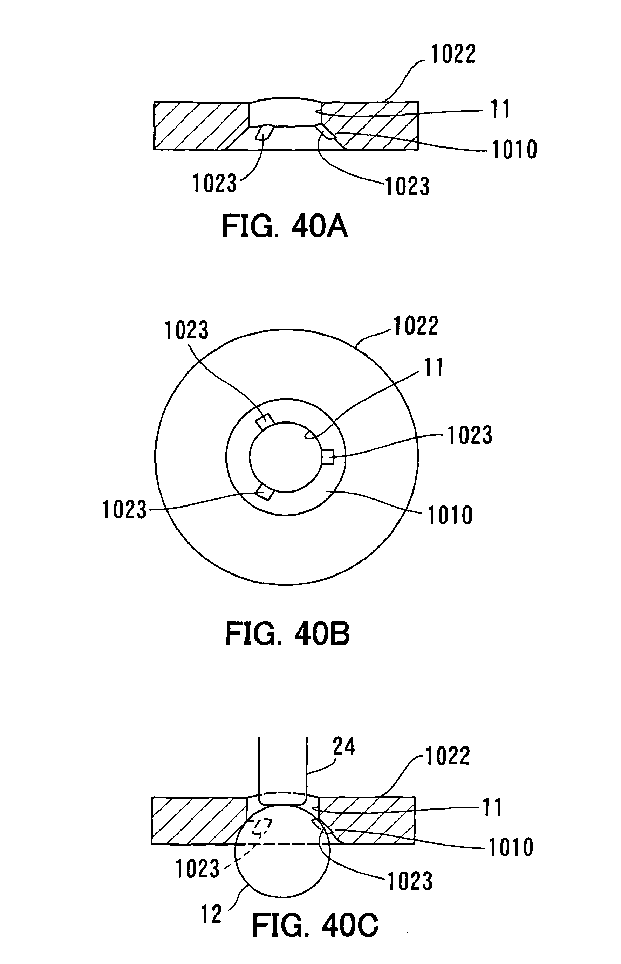

Figs. 40A to 40C explain a first variation and show the valve section and its vicinity body, corresponding to Figs. 39A to 39C.

In this variation, nicked seat portions are formed as refrigerant leakage passages in the valve section itself. In Figs. 40A and 40B, three nicked seat portions 1023 comprise grooves formed continuous with the valve hole 11 in the valve seat 1010 of the body 1022 at circumferentially predetermined spaced intervals (of 120 degrees). Even when the valve element 12 is seated on the valve seat 1010, gaps are formed between the nicked seat portions 1023 and the valve element 12, for communication with the valve hole 11. When the valve section is closed, refrigerant flows at a predetermined flow rate from the upstream side to the downstream side, to obtain the same advantageous effects as provided by the bleed hole 1003.

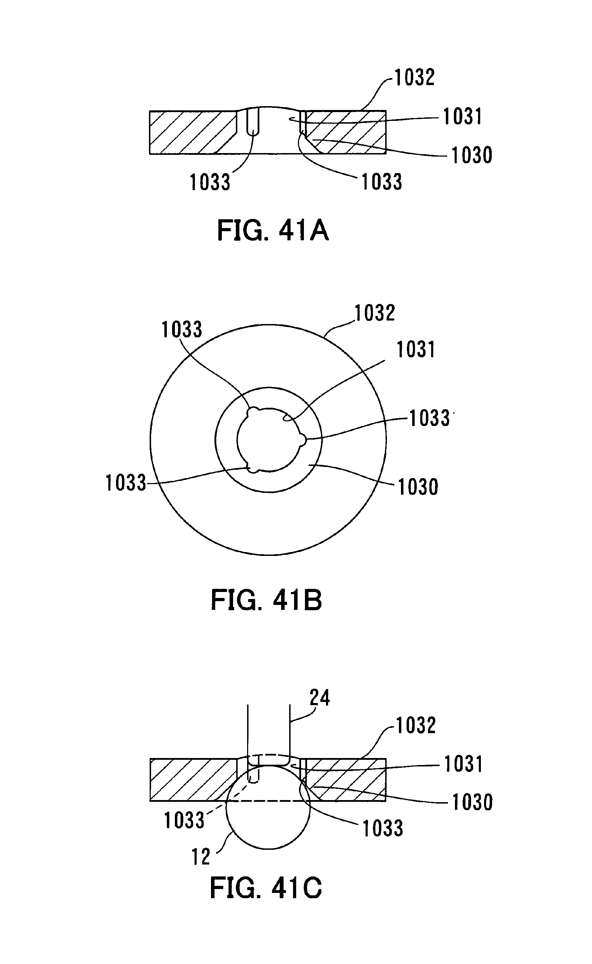

Figs. 41A to 41C explain a second variation of the expansion valve and show the valve section and its vicinity of the body, and corresponding to Figs. 39A to 39C. In this variation, nicked seat portions are formed as refrigerant leakage passages in the valve section itself. In Figs. 41A and 41 B, three nicked seat portions 1033 comprising grooves are formed in the valve hole 1031 of the body 1032 at circumferentially predetermined spaced intervals (of 120 degrees). In Fig. 41C, even when the valve element 12 is seated on a valve seat 1030, gaps are formed between the nicked seat portions 1033 and the valve element 12, for communication with the valve hole 1031. When the valve section is closed, refrigerant will flow at a predetermined flow rate from the upstream side to the downstream side, to obtain the same advantageous effects as provided by the bleed hole 1003. The nicked seat portions 1023 and 1033 are die-cast when the bodies 1022 and 1032 are die-cast, e.g. by using not shown projections on the mandrel 70 in Fig. 5. Conventionally, it has been difficult to manufacture stable sized nicked seat portions, when the nicked seat portions were formed by punching after a body is formed. By die casting, however it is possible to easily produce accurate machining of the nicked seat portions by corresponding mold machining.

In the above embodiments it is important to cope with the problem of so-called "gross porosity", when the bodies of the expansion valves are formed by die casting a metal. When a liquid molten metal (aluminum alloy in each embodiment described above) is injected into the body mold, the molten metal enters through the injection passage at high speed and with high pressure. As a result, air is easily entrained into the molten metal in the injection passage, or by turbulent flows generated when the molten metal passes through component part-forming portions of the mold. Entrapped air however, produces air pores (gross porosity formed by entrained air) inside the body. Further, the molten metal starts to solidify at low-temperature contact surfaces inside the mold, and thick portions of the metal are the last to solidify. Shrinkage of the portions that solidify at the last stage can produce shrinkage cavities. Further, the body formed as above sometimes may contain uneven crystalline particles with many dendritic structures, and the dendritic structures can be start points of fractures. If many or large cavities are formed in the body, there is a fear that adjacent cavities become interconnected causing refrigerant to leak from the body, or leak between internal passages.

Therefore, to avoid such cavities, it is preferable to employ a semi-solid die casting process when molding the body. Die casting then is carried out by injecting not a liquid metal slurry but a semi-solid metal slurry into the body mold (see Figs. 5 and 26). The semi-solid metal slurry contains many spherical particle structures with few dendritic structures. Further, since solid structures already exist, the ratio of molten metal portion per unit area is small, and therefore shrinkage cavities are more difficult to form than in the case where liquid molten metal is used. Further, since the metal slurry is filled in the mold in the semi-solid state thereof, turbulent flows scarcely occur in the mold. This avoids cavities produced by entrained air.

More specifically, it is envisaged to employ a semi-solid die casting process disclosed e.g. JP-Patent No.3496833.

That is, at the stage of making a metal slurry, molten metal is poured and agitated in a predetermined container with an electromagnetic field applied thereto, whereby spherical particles are formed without forming almost no dendritic crystals. Then, at a time point the solid phase ratio of the molten metal becomes preferably not less than 0.001 and not more than 0.1, the application of the electromagnetic field is terminated, and the molten metal is cooled. Then, at a time point the solid phase ratio of the molten metal becomes preferably not less than 0.1 and not more than 0.7, the cooling of the molten metal is terminated, whereby the metal slurry is obtained in a solid-liquid coexistent state. To reliably form a solid-liquid coexistent state of a metal slurry, it is preferable to use an aluminum alloy having a composition which contains not more than 17.0 wt% of Si, preferably 6.5 to 12.0 wt% of Si. For example, it is possible to use an aluminum alloy containing 9.6 to 12.0 wt% of Si as described above concerning the first embodiment, or an aluminum alloy containing 6.5 to 7.5 wt% of Si proven as a semi-solid material.

The metal slurry is composed of fine spherical particles having an average particle diameter of not less than 10 µm and not more than 60µm with a uniform particle size distribution. It is considered that this is because heat transmission within the molten metal is fast to suppress formation of an initial solid layer on the inner wall of the container, since the electromagnetic field is applied to the container when the molten metal is poured into the container, and inner molten metal and surface molten metal are well agitated. Therefore, uniform spherical particles are formed without forming almost no dendritic crystals.

There is no need to limit the semi-solid die casting process employed for molding the body to the process of JP-Patent No.3496833. For example, it is instead possible to employ other semi-solid die casting processes, such as a rheocasting process and a thixocasting process. However, the process of JP-Patent No.3496833 is preferable because the method is particularly excellent in suppressing generation of gross porosity since the process makes it possible to obtain a metal slurry with a smaller average particle diameter than a semi-solid die casting process of a general type.

## Claims

1. An expansion valve (1, 201, 301, 401, 501, 601, 701, 801, 901, 1001) for throttling and expanding a refrigerant which passes from an upstream side through a valve section to a downstream side of an expansion valve, **characterised in that** a body (2, 112, 122, 132, 202, 302, 322, 402, 502, 522, 602, 702, 802, 902, 1002) either including a valve seat (10) as a component part of the valve section or the valve section itself is formed by metal die casting.

2. The expansion valve according to claim 1, **characterised in that** the metal is an aluminum alloy.

3. The expansion valve according to claim 1, **characterised in that** the expansion valve is a temperature expansion valve disposed in a refrigeration cycle for throttling and expanding refrigerant passing from a condenser side through the valve section to an evaporator side by controlling a valve lift of the valve section by sensing pressure and temperature of refrigerant returning from the evaporator to a compressor side,
that the body has a first passage (8, 208, 408, 508) for the refrigerant passing from the condenser side through the valve section to the evaporator, the first passage (8, 208, 408, 508) containing the valve section in an intermediate portion, and a second passage (9, 209, 409, 509) for the refrigerant returning from the evaporator to the compressor side, the first and second passages (8, 9, 208, 209, 408, 409, 508, 509) being formed by die casting,
that the expansion valve comprises a power element (3, 203) on the body on a side of the second passage, opposite from the first passage, for sensing the temperature and pressure of the refrigerant flowing through the second passage,
and that the valve lift of the valve section in the first passage is controlled, via a shaft (24) to control the flow rate to the evaporator.

4. The expansion valve according to claim 3, **characterised in that** a die-cast adjustment part (13) communicating with the first passage (8, 208) supports a valve element (12) as a component part of the valve section, and accommodates an adjustment mechanism (14, 214) that adjusts an urging force for urging the valve element (12) in valve-closing direction.

5. The expansion valve according to claim 3, **characterised in that** a die-cast temperature-sensing part (18), to which the power element (3) is connected, communicates with the second passage (9, 209, 409, 509).

6. The expansion valve according to claim 3, **characterised in that** at ends of the first and second passages (8, 9, 208, 209, 408, 409, 508, 509) sealing surfaces for arranging sealing members are formed by the die casting.

7. The expansion valve according to claim 1, **characterised in that** the body has a plurality of die-cast weight-reducing or lightening portions (41, 341, 441).

8. The expansion valve according to claim 1, **characterised in that** the body is generally prism-shaped, and that die-cast lightening portions (41, 341, 441) are formed in side surfaces of the body in respective directions crossing each other.

9. The expansion valve according to claim 1, **characterised in that** the body has integrally die-cast mounting surface portions (36, 236, 338) which for mounting the expansion valve on a fire wall member (83), preferably disposed at a boundary between a vehicle compartment and an engine room.

10. The expansion valve according to claim 1, **characterised in that** the body has integrally die-cast flat surface portions (37, 237, 339) serving as holders.

11. The expansion valve according to claim 3, **characterised in that** the body has integrally die-cast flat surface portions (37, 237, 339) serving as holders on sides of the body, and
that the flat surface portions are formed on side surfaces of the body, which are parallel to the first and second passages (8, 9, 208, 209, 408, 409, 508, 509).

12. The expansion valve according to claim 2, **characterised in that** the aluminum alloy contains 9.6 to 12.0 wt% of Si, and 1.5 to 3.5 wt% of Cu.

13. The expansion valve according to claim 3, **characterised in that** the first passage (8, 208, 408, 508) has a portion including a first condenser side port (4), and downstream of the valve section a portion including a second evaporator supplying port (5), that the portions cross each other within the body, that the second passage (9, 209, 409, 509) has a portion including a third evaporator return port (6), and a portion including a fourth compressor supplying port (7), and that also the portions cross each other within the body.

14. The expansion valve according to claim 13, **characterised in that** a first side surface of the body where the first and fourth ports (4, 7) open, and a second side surface of the body where the second and the third ports (5, 6) open are orthogonal to each other.

15. The expansion valve according to claim 1, **characterised in that** the body has at least one integrally die-cast inflated portion (239, 331,332).

16. The expansion valve according to claim 15, **characterised in that** the inflated portion (239, 331, 332) is formed with through holes (333, 334, 335, 336) for mounting pipes.

17. The expansion valve according to claim 3, **characterised in that** the first passage (8, 208, 408, 508) includes a condenser side introduction passage; an evaporator delivery passage; and a valve hole (11) connecting the passages.

18. The expansion valve according to claim 3, **characterised by** a valve seat-forming member (606) as a component part of the valve section either forming the valve seat (10) or having the valve seat (10) formed therein, the valve seat-forming member (606) being formed in advance and either being insert-molded into the body (602) by die casting, or being assembled to a location of the valve section of the die-cast body.

19. The expansion valve according to claim 1, **characterised in that** a connection bolt (660) is partially insert-molded into the body (602) by die casting such that the connection bolt (630) protrudes outward from the body (602).

20. The expansion valve according to claim 1, **characterised in that** a pin (903) for positioning a joint interposed between the body (902) and a pipe when the pipe is connected to the body is integrally die-cast with the body.

21. The expansion valve according to claim 20, **characterised in that** the pin protrudes from an integrally die-cast inflated portion (331, 332) of the body.

22. The expansion valve according to claim 1, **characterised in that** a refrigerant leakage passage (1003, 1023, 1033) for ensuring a flow between upstream and downstream sides at a predetermined flow rate even when the valve section is closed is integrally die-cast in the body either in a valve hole (11) of the valve section or separate in the vicinity of the valve hole (11).

23. The expansion valve according to claim 22, **characterised in that** the refrigerant leakage passage (1003) is a bleed hole formed separate in the body in the vicinity of the valve hole (11).

24. The expansion valve according to claim 22, **characterised in that** the refrigerant leakage passage (1023, 1033) is a nicked seat comprising at least one groove portion formed continuous with the valve hole of the valve section, and that the groove portion forms, when the valve element (12) is seated on the valve seat (10, 1030) of the valve section, a predetermined open gap between the valve element and the valve seat communicating with the valve hole.

25. Method for manufacturing an expansion valve according to claim 1, **characterised in that** the body (2, 112, 122, 132, 202, 302, 322, 402, 502, 522, 602, 702, 802, 902, 1002) is die-cast by a semi-solid die casting process of metallic material in a mold.

26. Method according to claim 25, **characterised in that** the body is formed by injecting a semi-solid metal slurry composed of spherical particles into the mold.

27. Method valve according to claim 26, **characterised in that** the spherical particles in the metal slurry have an average particle diameter of not less than 10 µm and not more than 60µm.

28. Method according to claim 26, **characterised in that** the injected metal slurry is an aluminum alloy containing 6.5 to 12.0 wt% of Si.

29. Method according to claim 26, **characterised in that** the metal slurry is formed to be in a solid-liquid coexistent state, by pouring a molten metal into a container while applying an electromagnetic field to inhibit the formation of dendritic crystals, and that the molten metal is cooled after termination of the application of the electromagnetic field to the container.

30. Method according to claim 29, **characterised in that** the spherical particles are formed by agitating the molten metal in the container during application of the electromagnetic field to inhibit formation of dendritic crystals.

31. Method according to claim 29, **characterised in that** the metal slurry is formed by terminating the application of the electromagnetic field when the solid phase ratio of the molten metal is not less than 0.001 and not more than 0.1.

32. Method according to claim 31, **characterised in that** the metal slurry is formed by terminating the cooling of the molten metal when the solid phase ratio of the molten metal is not less than 0.1 and not more than 0.7.

33. Method according to claim 25, **characterised in that** the metallic body is composed of spherical metal particles having a particle diameter of not less than 10 µm and not more than 60µm.
